# EUROPÄISCHE PATENTSCHRIFT

(11) **EP 4 499 402 B1**
(45) Veröffentlichungstag und Bekanntmachung des Hinweises auf die Patenterteilung: **28.01.2026**
(21) Anmeldenummer: 23711748.6
(22) Anmeldetag: 22.03.2023
(51) Int. Cl.: B32B 3/08, B32B 17/10, B60J 1/02, G02B 27/01

(54) **VERBUNDSCHEIBE MIT VERZÖGERUNGSPLATTE**
COMPOUND GLAZING WITH WAVEPLATE
VITRE COMPOSITE POURVUE DE LAME DE RETARDEMENT

(30) Priorität: 30.03.2022 EP 22165378
(43) Veröffentlichungstag der Anmeldung: 05.02.2025
(73) Patentinhaber: Saint-Gobain Sekurit France, 60150 Thourotte (FR)
(72) Erfinder: GOMER, Andreas, 52134 Herzogenrath (DE); HAGEN, Jan, 52134 Herzogenrath (DE); GREVERATH, Julian, 52134 Herzogenrath (DE)
(74) Vertreter: SGR Germany-Patents
(86) Internationale Anmeldenummer: PCT/EP2023/057259
(87) Internationale Veröffentlichungsnummer: WO 2023/186637

(56) Entgegenhaltungen:
- DE-A1- 102014 220 189

## Beschreibung

Die Erfindung betrifft eine Verbundscheibe mit einer λ/4-Verzögerungsplatte, eine Projektionsanordnung und die Verwendung der Verbundscheibe.

Zum Anzeigen von Navigationsinformationen in Windschutzscheiben werden häufig die unter dem Begriff Head-up-Display (HUD) bekannten Projektionsanordnungen aus Bildanzeigevorrichtung und Windschutzscheibe mit keilwinkelförmiger thermoplastischer Zwischenschicht und/oder keilwinkelförmigen Scheiben verwendet. Ein Keilwinkel ist dabei zur Vermeidung von Doppelbildern notwendig. Das projizierte Bild erscheint in Form eines virtuellen Bildes in einem gewissen Abstand zur Windschutzscheibe, so dass der Fahrer des Kraftfahrzeugs beispielsweise die projizierte Navigationsinformation als vor ihm auf der Straße befindlich wahrnimmt. Die Strahlung von HUD-Bildanzeigevorrichtungen ist typischerweise im Wesentlichen s-polarisiert, aufgrund der besseren Reflexionscharakteristik der Windschutzscheibe im Vergleich zur p-Polarisation. Trägt der Betrachter jedoch eine polarisationsselektive Sonnenbrille, die kein s-polarisiertes Licht transmittiert, so wird er das HUD-Bild allenfalls abgeschwächt wahrnehmen. Eine Lösung dieses Problems ist die Anwendung von Projektionsanordnungen, die p-polarisiertes Licht verwenden.

DE102014220189A1 offenbart eine Head-Up-Display-Projektionsanordnung, die mit p-polarisierter Strahlung betrieben wird, wobei die Windschutzscheibe eine reflektierende Struktur aufweist, die p-polarisierte Strahlung in Richtung des Betrachters reflektiert. Auch US20040135742A1 offenbart eine Head-Up-Display-Projektionsanordnung unter Verwendung p-polarisierter Strahlung, die eine reflektierende Struktur aufweist. In WO 96/19347A3 wird als reflektierende Struktur eine mehrlagige Polymerschicht vorgeschlagen.

Bei der Auslegung eines Displays, das auf der Head-Up-Display-Technologie basiert, muss weiterhin dafür Sorge getragen werden, dass die Bildanzeigevorrichtung eine entsprechend große Leistung hat, so dass das projizierte Bild, insbesondere bei Einfall von Sonnenlicht, eine ausreichende Helligkeit aufweist und vom Betrachter gut erkennbar ist. Dies erfordert eine gewisse Größe der Bildanzeigevorrichtung und geht mit einem entsprechenden Stromverbrauch einher.

Demnach besteht ein Bedarf an verbesserten Verbundscheiben für Projektionsanordnungen, mit dem diese Nachteile vermieden werden können. Es besteht somit Bedarf an verbesserten Verbundscheiben für Projektionsanordnungen, bei denen die Projektionsanordnungen einen guten Kontrast des erzeugten Bildes auch bei Gegenlicht und einen geringen Energieverbrauch aufweisen sowie bei denen projizierte Bilder für einen Betrachter, welcher eine polarisationsselektive Sonnenbrille trägt, gut wahrgenommen werden können. Der vorliegenden Erfindung liegt die Aufgabe zugrunde, eine solche verbesserte Verbundscheibe, ein Verfahren zu deren Herstellung und deren Verwendung sowie eine verbesserte Projektionsanordnung mit einer verbesserten Verbundscheibe bereitzustellen.

Diese Aufgabe wird erfindungsgemäß durch eine Verbundscheibe gemäß Anspruch 1, eine Projektionsanordnung und eine Verwendung gemäß den nebengeordneten Ansprüchen, gelöst. Bevorzugte Ausführungsformen gehen aus den Unteransprüchen hervor.

Die erfindungsgemäße Verbundscheibe umfasst eine Außenscheibe, mindestens eine thermoplastische Zwischenschicht, eine Reflexionsschicht, eine opake Maskierungsschicht, eine Innenscheibe, eine Klebeschicht und eine λ/4-Verzögerungsplatte.

Die Verbundscheibe weist einen Hauptdurchsichtsbereich und einen Projektionsbereich auf.

Die Verbundscheibe ist dafür vorgesehen, in einer Fensteröffnung eines Fahrzeugs den Innenraum gegenüber der äußeren Umgebung abzutrennen. Mit Innenscheibe wird im Sinne der Erfindung die dem Fahrzeuginnenraum zugewandte Scheibe der Verbundscheibe bezeichnet. Mit Außenscheibe wird die der äußeren Umgebung zugewandte Scheibe bezeichnet.

Die Verbundscheibe weist eine Oberkante und eine Unterkante auf sowie zwei dazwischen verlaufende Seitenkanten auf. Mit Oberkante wird diejenige Kante bezeichnet, welche dafür vorgesehen ist, in Einbaulage nach oben zu weisen. Mit Unterkante wird diejenige Kante bezeichnet, welche dafür vorgesehen ist, in Einbaulage nach unten zu weisen. Im Falle einer Windschutzscheibe wird die Oberkante häufig auch als Dachkante und die Unterkante als Motorkante bezeichnet.

Die Außenscheibe und die Innenscheibe weisen jeweils eine außenseitige und eine innenraumseitige Oberfläche auf und eine dazwischen verlaufende, umlaufende Seitenkante.

Mit außenseitiger Oberfläche wird im Sinne der Erfindung diejenige Hauptfläche bezeichnet, welche dafür vorgesehen ist, in Einbaulage der äußeren Umgebung zugewandt zu sein. Mit innenraumseitiger Oberfläche wird im Sinne der Erfindung diejenige Hauptfläche bezeichnet, welche dafür vorgesehen ist, in Einbaulage dem Innenraum zugewandt zu sein. Die innenraumseitige Oberfläche der Außenscheibe und die außenseitige Oberfläche der Innenscheibe sind einander zugewandt und durch die mindestens eine thermoplastische Zwischenschicht miteinander verbunden. Somit ist die außenseitige Oberfläche der Außenscheibe von der mindestens einen thermoplastischen Zwischenschicht abgewandt und die innenraumseitige Oberfläche der Außenscheibe ist der mindestens einen thermoplastischen Zwischenschicht zugewandt. Die außenseitige Oberfläche der Innenscheibe ist der mindestens einen thermoplastischen Zwischenschicht zugewandt und die innenraumseitige Oberfläche der Innenscheibe ist von der mindestens einen thermoplastischen Zwischenschicht abgewandt.

Die außenseitige Oberfläche der Außenscheibe wird als Seite I bezeichnet. Die innenraumseitige Oberfläche der Außenscheibe wird als Seite II bezeichnet. Die außenseitige Oberfläche der Innenscheibe wird als Seite III bezeichnet. Die innenraumseitige Oberfläche der Innenscheibe wird als Seite IV bezeichnet.

Erfindungsgemäß ist der Projektionsbereich außerhalb des Hauptdurchsichtsbereichs angeordnet. Dies bedeutet der Projektionsbereich und der Hauptdurchsichtsbereich überlappen nicht miteinander. In einer bevorzugten Ausführungsform sind der Hauptdurchsichtsbereich und der Projektionsbereich voneinander beabstandet angeordnet, d.h. der Hauptdurchsichtsbereich und der Projektionsbereich sind in dieser Ausführungsform nicht aneinander angrenzend angeordnet. In einer weiteren Ausführungsform sind der Projektionsbereich und der Hauptdurchsichtsbereich aneinander angrenzend angeordnet, d.h. in dieser Ausführungsform sind der Hauptdurchsichtsbereich und der Projektionsbereich unmittelbar benachbart zueinander angeordnet.

Die Reflexionsschicht ist zur Reflexion von Licht geeignet. Es handelt sich bei der Reflexionsschicht somit um eine Licht reflektierende Schicht. Die Reflexionsschicht ist beispielsweise zur Reflexion von p-polarisiertem Licht und/oder zur Reflexion von zirkular polarisiertem Licht geeignet. Sie kann somit als eine p-polarisierendes Licht reflektierende Schicht und/oder als eine zirkular polarisierendes Licht reflektierende Schicht ausgebildet sein. Erfindungsgemäß ist die Reflexionsschicht zwischen der Außenscheibe und der Innenscheibe angeordnet und zumindest im Projektionsbereich angeordnet.

Die Reflexionsschicht reflektiert bevorzugt mindestens 5 %, besonders bevorzugt mindestens 10 % des auf die Reflexionsschicht auftreffenden Lichtes in einem Wellenlängenbereich von 450 nm bis 650 nm und Einstrahlwinkeln von 55° bis 75°. Besonders bevorzugt reflektiert die Reflexionsschicht 30 % oder mehr, besonders bevorzugt 50 % oder mehr, ganz besonders 70 % oder mehr und insbesondere 90 % oder mehr des auf die Reflexionsschicht auftreffenden Lichtes.

Die opake Maskierungsschicht ist zumindest in dem Projektionsbereich zwischen der Außenscheibe und der Innenscheibe angeordnet und in Durchsicht durch die Verbundscheibe ausgehend von der innenraumseitigen Oberfläche der Innenscheibe räumlich hinter der Reflexionsschicht angeordnet. Somit hat die Reflexionsschicht im Einbauzustand der erfindungsgemäßen Verbundscheibe in einem Fahrzeug einen geringeren Abstand zum Fahrzeuginnenraum als die opake Maskierungsschicht.

Es versteht sich, dass die opake Maskierungsschicht außerhalb des Hauptdurchsichtsbereichs der Verbundscheibe angeordnet ist. Aufgrund der Anordnung der opaken Maskierungsschicht außerhalb des Hauptdurchsichtsbereichs wird die Transparenz der Verbundscheibe im Hauptdurchsichtsbereich durch die opake Maskierungsschicht nicht beeinflusst.

Die λ/4-Verzögerungsplatte ist über die Klebeschicht mit der innenraumseitigen Oberfläche der Innenscheibe verbunden. Bei senkrechter Durchsicht durch die Verbundscheibe ist die λ/4-Verzögerungsplatte in einem Bereich der Verbundscheibe angeordnet, der vollständig in dem Bereich liegt, in dem die opake Maskierungsschicht angeordnet ist.

Erfindungsgemäß liegt der Projektionsbereich bei senkrechter Durchsicht durch die Verbundscheibe vollständig in dem Bereich der Verbundscheibe, in dem die λ/4-Verzögerungsplatte angeordnet ist. Somit ist der Projektionsbereich in senkrechter Sicht durch die Verbundscheibe bzw. in orthogonaler Projektion durch die Verbundscheibe in Überdeckung bzw. Überlapp zur λ/4-Verzögerungsplatte angeordnet. Der Projektionsbereich weist somit keinen Abschnitt auf, der nicht in Überdeckung zur die λ/4-Verzögerungsplatte ist.

Dadurch, dass die opake Maskierungsschicht zumindest im Projektionsbereich angeordnet ist, ist der Projektionsbereich in senkrechter Sicht durch die Verbundscheibe bzw. in orthogonaler Projektion durch die Verbundscheibe in Überdeckung bzw. Überlapp zur opaken Maskierungsschicht angeordnet.

In einer bevorzugten Ausführungsform der erfindungsgemäßen Verbundscheibe ist die Reflexionsschicht im Wesentlichen vollflächig zwischen der Außenscheibe und der Innenscheibe angeordnet. Unter einer im Wesentlichen vollflächigen Anordnung der Reflexionsschicht ist eine vollflächige Anordnung oder eine vollflächige Anordnung abzüglich eines umlaufenden Randbereichs mit einer Breite von beispielsweise 5 mm bis 50 mm zu verstehen. Die Breite des umlaufenden Randbereichs kann konstant sein oder variieren.

In einer weiteren bevorzugten Ausführungsform ist die Reflexionsschicht zwischen der Außenscheibe und der Innenscheibe in einem Bereich angeordnet, welcher bei senkrechter Durchsicht durch die Verbundscheibe vollständig in dem Bereich liegt, in dem die opake Maskierungsschicht angeordnet ist.

Wie oben beschrieben ist die Reflexionsschicht zwischen der Außenscheibe und der Innenscheibe angeordnet. In einer bevorzugten Ausführungsform ist die Reflexionsschicht zwischen der Innenscheibe und der mindestens einen thermoplastischen Zwischenschicht angeordnet. In einer weiteren bevorzugten Ausführungsform ist die Reflexionsschicht zwischen der Außenscheibe und der mindestens einen thermoplastischen Zwischenschicht angeordnet. In Ausführungsformen, in denen die Verbundscheibe mindestens zwei thermoplastische Zwischenschichten aufweist, kann die Reflexionsschicht zwischen der Innenscheibe und den mindestens zwei thermoplastischen Zwischenschichten oder zwischen der Außenscheibe und den mindestens zwei thermoplastischen Zwischenschichten oder insbesondere zwischen zwei der mindestens zwei thermoplastischen Zwischenschichten angeordnet sein.

Bevorzugt ist die Klebeschicht eine thermoplastische Polymerschicht oder ein optisch klarer Kleber (OCA).

Dem Fachmann sind geeignete optische klare Kleber, sogenannte optical clear adhesives (OCA) bekannt.

Eine als thermoplastische Polymerschicht ausgebildete Klebeschicht enthält zumindest ein thermoplastisches Polymer, bevorzugt Ethylenvinylacetat (EVA), Polyvinylbutyral (PVB) oder Polyurethan (PU) oder Gemische oder Copolymere oder Derivate davon, besonders bevorzugt PVB. Die thermoplastische Polymerschicht ist typischerweise aus einer thermoplastischen Folie (Verbindefolie) ausgebildet. Die Dicke der thermoplastischen Polymerschicht beträgt bevorzugt von 0,2 mm bis 2 mm, besonders bevorzugt von 0,3 mm bis 1 mm, beispielsweise 760 µm (Mikrometer). Die thermoplastische Polymerschicht kann durch eine einzelne Folie ausgebildet sein oder auch durch mehr als eine Folie.

Bei der opaken Maskierungsschicht handelt es sich bevorzugt um eine periphere, d.h. rahmenartige, Maskierungsschicht, die somit in einem umlaufenden Randbereich angeordnet ist. Eine periphere opake Maskierungsschicht dient zusätzlich als UV-Schutz für den Montagekleber der Verbundscheibe.

Besonders bevorzugt sind Ausführungsformen, in denen der Projektionsbereich benachbart zur Unterkante der Verbundscheibe angeordnet ist. Dabei kann der Projektionsbereich entweder unmittelbar benachbart oder mittelbar benachbart zur Unterkante angeordnet sein. Unter mittelbar benachbart ist zu verstehen, dass der Projektionsbereich nicht direkt an die Unterkante angrenzt, sondern um beispielsweise einige Zentimeter, beispielsweise um 1cm bis 10 cm, bevorzugt um 1 cm bis 5 cm, von dieser beabstandet angeordnet ist.

Dadurch dass der Projektionsbereich bei senkrechter Durchsicht durch die Verbundscheibe vollständig in dem Bereich der Verbundscheibe liegt, in dem die λ/4-Verzögerungsplatte angeordnet ist und die λ/4-Verzögerungsplatte in einem Bereich der Verbundscheibe angeordnet ist, der bei senkrechter Durchsicht durch die Verbundscheibe vollständig in dem Bereich liegt, in dem die opake Maskierungsschicht angeordnet ist, ist folglich auch die opake Maskierungsschicht bevorzugt zumindest in einem Bereich benachbart zur Unterkante der Verbundscheibe angeordnet.

In einer bevorzugten Ausführungsform einer erfindungsgemäßen Verbundscheibe ist die opake Maskierungsschicht zumindest teilweise in einem umlaufenden Randbereich angeordnet und weist insbesondere in einem Abschnitt, der in Überdeckung zum Projektionsbereich ist, eine größere Breite auf als in hiervon verschiedenen Abschnitten.

Die opake Maskierungsschicht im Sinne der Erfindung ist eine Schicht, die die Durchsicht durch die Verbundscheibe verhindert. Dabei findet eine Transmission von höchstens 10 %, bevorzugt höchstens 5 %, besonders bevorzugt von höchstens 2 %, ganz besonders bevorzugt von höchstens 1 %, insbesondere von höchstens 0,1 %, des Lichtes des sichtbaren Spektrums durch die opake Maskierungsschicht statt. Die opake Maskierungsschicht ist bevorzugt schwarz.

Die opake Maskierungsschicht ist bevorzugt eine Beschichtung aus einer oder mehreren Schichten. Alternativ kann er aber auch ein in die Verbundscheibe eingelegtes, opakes Element sein, beispielsweise eine Folie. Gemäß einer bevorzugten Ausgestaltung der Verbundscheibe besteht die opake Maskierungsschicht aus einer Einzelschicht. Dies hat den Vorteil einer besonders einfachen und kostengünstigen Fertigung der Verbundscheibe, da nur eine einzige Schicht für die opake Maskierungsschicht ausgebildet werden muss.

Bei der opaken Maskierungsschicht handelt es sich insbesondere um einen opaken Abdeckdruck aus einer dunklen, bevorzugt schwarzen, Emaille.

Eine als opaker Abdeckdruck ausgebildete opake Maskierungsschicht kann vollflächig ausgebildet sein. Der Abdeckdruck kann zumindest abschnittsweise auch semitransparent, beispielsweise als Punktraster, Streifenraster oder kariertes Raster ausgebildet sein. Alternativ kann der Abdeckdruck auch einen Gradienten aufweisen, beispielsweise von einer opaken Bedeckung zu einer semitransparenten Bedeckung. Bevorzugt ist die als opaker Abdeckdruck ausgebildete Maskierungsschicht zumindest im Projektionsbereich vollflächig ausgebildet.

In einer bevorzugten Ausführungsform ist die opake Maskierungsschicht als ein opaker Abdeckdruck auf der innenraumseitigen Oberfläche der Außenscheibe ausgebildet.

In einer Ausführungsform ist die opake Maskierungsschicht als ein opak gefärbter Bereich der mindestens einen thermoplastischen Zwischenschicht ausgebildet.

In einer Ausführungsform weist die Verbundscheibe eine thermoplastische Zwischenschicht auf, welche einstückig ausgebildet und in einem Bereich opak gefärbt ist. In einer weiteren Ausführungsform weist die Verbundscheibe mindestens zwei thermoplastische Zwischenschichten auf und eine von diesen ist einstückig ausgebildet und in einem Bereich opak gefärbt.

Eine als ein opak gefärbter Bereich einer thermoplastischen Zwischenschicht ausgebildete opake Maskierungsschicht kann auch realisiert werden, in dem eine aus einer opaken thermoplastischen Folie und einer transparenten thermoplastischen Folie zusammengesetzte thermoplastische Zwischenschicht eingesetzt wird. Die opake thermoplastische Folie und die transparente thermoplastische Folie werden vorzugsweise versetzt voneinander angeordnet, sodass sich beide Folien in Durchsicht durch die Verbundscheibe nicht überdecken. Die transparente und die opake Folie bestehen aus dem gleichen Kunststoff oder enthalten vorzugsweise den gleichen Kunststoff. Die Materialien auf dessen Basis die opake Folie und die transparente Folie ausgebildet sein können, sind jene, die auch für die mindestens eine thermoplastische Zwischenschicht beschrieben sind. Die opake Folie ist vorzugsweise eine gefärbte Folie, die verschiedene Farben, insbesondere schwarz, aufweisen kann.

Aus Sicht eines Fahrzeuginsassen ist die Reflexionsschicht in Durchsicht durch die Innenscheibe zumindest bereichsweise räumlich vor der opaken Maskierungsschicht angeordnet. Der Bereich der Verbundscheibe, in dem die Reflexionsschicht räumlich vor der opaken Maskierungsschicht angeordnet ist, wirkt dadurch opak. Die Reflexionsschicht ist in dem Bereich vor der opaken Maskierungsschicht vorzugsweise transparent, kann jedoch auch selbst opak sein. Der Ausdruck "in Durchsicht durch die Verbundscheibe" bedeutet, dass durch die Verbundscheibe geblickt wird, ausgehend von der innenraumseitigen Oberfläche der Innenscheibe. Im Sinne der vorliegenden Erfindung bedeutet "räumlich vor", dass die Reflexionsschicht räumlich weiter entfernt von der außenseitigen Oberfläche der Außenscheibe angeordnet ist als die opake Maskierungsschicht.

Die erfindungsgemäße Verbundscheibe kann optional einen zusätzlichen opaken Abdeckdruck auf der innenraumseitigen Oberfläche der Außenscheibe, auf der außenseitigen Oberfläche der Innenscheibe oder auf der innenraumseitigen Oberfläche der Innenscheibe aufweisen mit der Maßgabe, dass dieser zusätzliche opake Abdeckdruck in einem Bereich außerhalb des Hauptdurchsichtsbereichs und außerhalb des Projektionsbereichs angeordnet ist.

Die Reflexionsschicht ist bevorzugt als eine reflektierende Beschichtung oder als eine reflektierende Folie ausgebildet.

In einer bevorzugten Ausführungsform ist die Reflexionsschicht als eine reflektierende Beschichtung der außenseitigen Oberfläche der Innenscheibe ausgebildet.

In einer weiteren bevorzugten Ausführungsform ist die Reflexionsschicht als eine reflektierende Beschichtung der innenraumseitigen Oberfläche der Außenscheibe ausgebildet, mit der Maßgabe, dass die opake Maskierungsschicht in Durchsicht durch die Verbundscheibe ausgehend von der innenraumseitigen Oberfläche der Innenscheibe räumlich hinter der Reflexionsschicht angeordnet ist.

Die Reflexionsschicht kann auch als eine reflektierende Beschichtung der thermoplastischen Zwischenschicht ausgebildet sein.

Die Reflexionsschicht umfasst vorzugsweise mindestens ein Metall ausgewählt aus einer Gruppe, bestehend aus Aluminium, Zinn, Titan, Kupfer, Chrom, Cobalt, Eisen, Mangan, Zirkonium, Cer, Yttrium, Silber, Gold, Platin und Palladium, oder Mischungen davon.

In einer bevorzugten Ausführungsform der Erfindung ist die Reflexionsschicht eine reflektierende Beschichtung enthaltend einen Dünnschichtstapel, also eine Schichtenfolge dünner Einzelschichten. Dieser Dünnschichtstapel enthält eine oder mehrere elektrisch leitfähige Schichten auf Basis von Silber. Die elektrisch leitfähige Schicht auf Basis von Silber verleiht der Reflexionsbeschichtung die grundlegenden reflektierenden Eigenschaften und außerdem eine IR-reflektierende Wirkung und eine elektrische Leitfähigkeit. Die elektrisch leitfähige Schicht ist auf Basis von Silber ausgebildet. Die leitfähige Schicht enthält bevorzugt mindestens 90 Gew. % Silber, besonders bevorzugt mindestens 99 Gew. % Silber, ganz besonders bevorzugt mindestens 99,9 Gew. % Silber. Die Silberschicht kann Dotierungen aufweisen, beispielsweise Palladium, Gold, Kupfer oder Aluminium. Materialen auf der Basis von Silber sind besonders geeignet, um p-polarisiertes Licht, zu reflektieren Die Beschichtung weist eine Dicke von 5 µm bis 50 µm und bevorzugt von 8 µm bis 25 µm auf.

Die Reflexionsschicht kann auch als eine reflektierende beschichtete oder unbeschichtete Folie ausgebildet sein. Die Reflexionsschicht kann eine Trägerfolie mit einer reflektierenden Beschichtung sein oder eine unbeschichtete reflektierende Polymerfolie. Die reflektierende Beschichtung umfasst bevorzugt mindestens eine Schicht auf Basis eines Metalls und/oder eine dielektrische Schichtabfolge mit alternierenden Brechungsindizes. Die Schicht auf Basis eines Metalls enthält bevorzugt Silber und/oder Aluminium, oder besteht daraus. Die dielektrischen Schichten können beispielsweise auf Basis von Siliziumnitrid, Zinkoxid, Zinn-Zink-Oxid, Silizium-Metall-Mischnitriden wie Silizium-Zirkonium-Nitrid, Zirkoniumoxid, Nioboxid, Hafniumoxid, Tantaloxid, Wolframoxid oder Siliziumkarbid ausgebildet sein. Die genannten Oxide und Nitride können stöchiometrisch, unterstöchiometrisch oder überstöchiometrisch abgeschieden sein. Sie können Dotierungen aufweisen, beispielsweise Aluminium, Zirkonium, Titan oder Bor. Die reflektierende unbeschichtete Polymerfolie umfasst bevorzugt dielektrische Polymerschichten oder besteht daraus. Die dielektrischen Polymerschichten enthalten bevorzugt Polyethylenterephthalat (PET). Ist die Reflexionsschicht als eine reflektierende Folie ausgebildet, ist sie bevorzugt von 30 µm bis 300 µm, besonders bevorzugt von 50 µm bis 200 µm und insbesondere von 100 µm bis 150 µm dick.

Ist die Reflexionsschicht als eine reflektierende Beschichtung ausgebildet, wird sie bevorzugt durch physikalische Gasphasenabscheidung (PVD), besonders bevorzugt durch Kathodenzerstäubung ("Sputtern") und ganz besonders bevorzugt durch magnetfeldunterstütze Kathodenzerstäubung ("Magnetron-Sputtern") auf die innenraumseitige Oberfläche der Außenscheibe oder auf die außenseitige Oberfläche der Innenscheibe aufgebracht. Grundsätzlich kann die Beschichtung aber auch beispielsweise mittels chemischer Gasphasenabscheidung (CVD), plasmagestützte Gasphasenabscheidung (PECVD), durch Aufdampfen oder durch Atomlagenabscheidung (atomic layer deposition, ALD) aufgebracht werden.

Handelt es sich um eine beschichtete, reflektierende Folie, können zur Herstellung ebenfalls die Beschichtungsverfahren CVD oder PVD angewendet werden.

Gemäß einer weiteren bevorzugten Ausgestaltung der erfindungsgemäßen Verbundscheibe ist die Reflexionsschicht als reflektierende beschichtete Trägerfolie oder unbeschichtete Polymerfolie ausgebildet und bevorzugt zwischen zwei thermoplastischen Zwischenschichten angeordnet. Der Vorteil dieser Anordnung ist, dass die Reflexionsschicht nicht mittels Dünnschichttechnologie (beispielsweise CVD und PVD) auf der Außenscheibe oder Innenscheibe aufgebracht werden muss. Hieraus ergeben sich Verwendungen der Reflexionsschicht mit weiteren vorteilhaften Funktionen wie eine homogenere Reflexion des Lichtes an der Reflexionsschicht.

Die Reflexionsschicht kann auch als eine Polyethylenterephthalat (PET) basierte Folie ausgebildet sein, die mit einem Copolymerenschichtenstapel auf Basis von PET und/oder Polyethylennaphthalat (PEN) beschichtet ist. Die Beschichtung ist bevorzugt auf der innenraumseitigen Oberfläche, d.h. der Oberfläche, die dem Fahrzeuginnenraum zugewandt ist, aufgebracht. Solche Folien sind insbesondere zur Reflexion von p-polarisiertem Licht geeignet. Geeignete reflektierende Folien sind beispielsweise in der US 5,882,774 A beschrieben.

Wie oben beschrieben weist die Reflexionsschicht in einer bevorzugten Ausführungsform mindestens eine elektrisch leitfähige Schicht Basis von Silber auf. Die leitfähige Schicht enthält bevorzugt mindestens 90 Gew. % Silber, besonders bevorzugt mindestens 99 Gew. % Silber, ganz besonders bevorzugt mindestens 99,9 Gew. % Silber. Die Silberschicht kann Dotierungen aufweisen, beispielsweise Palladium, Gold, Kupfer oder Aluminium. Die Dicke der Silberschicht beträgt üblicherweise von 5 nm bis 20 nm.

Oberhalb und unterhalb der elektrisch leitfähigen Schicht sind typischerweise dielektrische Schichten oder Schichtenfolgen angeordnet. Umfasst die Reflexionsbeschichtung mehrere leitfähige Schichten, so ist bevorzugt jede leitfähige Schicht jeweils zwischen zwei typischerweise dielektrischen Schichten oder Schichtenfolgen angeordnet, so dass zwischen benachbarten leifähigen Schichten jeweils eine dielektrische Schicht oder Schichtenfolgen angeordnet ist. Die Reflexionsschicht ist also bevorzugt ein Dünnschichtstapel mit n elektrisch leitfähigen Schichten und (n+1) dielektrischen Schichten oder Schichtenfolgen, wobei n eine natürliche Zahl ist und wobei auf eine untere dielektrische Schicht oder Schichtenfolge jeweils im Wechsel eine leitfähige Schicht und eine dielektrische Schicht oder Schichtenfolge folgt. Solche Reflexionsschichten sind als Sonnenschutzbeschichtungen und heizbare Beschichtungen bekannt. Durch die mindestens eine elektrisch leitfähige Schicht weist die Reflexionsschicht IR-reflektierende Eigenschaften auf, so dass sie als Sonnenschutzbeschichtung fungiert, welche die Aufheizung des Fahrzeuginnenraums durch Reflexion der Wärmestrahlung verringert. Die Reflexionsschicht kann auch als Heizbeschichtung verwendet werden, wenn sie elektrisch kontaktiert wird, so dass ein Strom durch sie fließt, welcher die Reflexionsschicht erwärmt.

Gebräuchliche dielektrische Schichten eines solchen Dünnschichtstapels sind beispielsweise:
- Entspiegelungsschichten, welche die Reflexion von sichtbarem Licht senken und somit die Transparenz der beschichteten Scheibe erhöhen, beispielsweise auf Basis von Siliziumnitrid, Silizium-Metall-Mischnitriden wie Siliziumzirkoniumnitrid, Titanoxid, Aluminiumnitrid oder Zinnoxid, mit Schichtdicken von beispielsweise 10 nm bis 100 nm;
- Anpassungsschichten, welche die Kristallinität der elektrisch leitfähigen Schicht verbessern, beispielsweise auf Basis von Zinkoxid (ZnO), mit Schichtdicken von beispielsweise 3 nm bis 20 nm;
- Glättungsschichten, welche die Oberflächenstruktur für die darüberliegenden Schichten verbessern, beispielsweise auf Basis eines nichtkristallinen Oxids von Zinn, Silizium, Titan, Zirkonium, Hafnium, Zink, Gallium und/oder Indium, insbesondere auf Basis von Zinn-Zink-Mischoxid (ZnSnO), mit Schichtdicken von beispielsweise 3 nm bis 20 nm.

Durch die mindestens eine elektrisch leitfähige Schicht weist eine solche Reflexionsschicht reflektierende Eigenschaften im sichtbaren Spektralbereich auf, die in gewissem Maße immer auch gegenüber p-polarisierter Strahlung auftreten. Durch eine geeignete Wahl der Schichtdicken, insbesondere der dielektrischen Schichtenfolge, kann beispielsweise die Reflexion gegenüber p-polarisierter Strahlung gezielt optimiert werden.

Die Reflexionsschicht kann neben den elektrisch leitfähigen Schichten und dielektrischen Schichten auch Blockerschichten umfassen, welche die leitfähigen Schichten vor Degeneration schützen. Blockerschichten sind typischerweise sehr dünne metallhaltige Schichten auf Basis von Niob, Titan, Nickel, Chrom und/oder Legierungen mit Schichtdicken von beispielsweise 0,1 nm bis 2 nm.

In einer besonders bevorzugten Ausführungsform weist die Reflexionsschicht genau eine elektrisch leitfähige Schicht auf Basis von Silber auf.

In einer ganz besonders bevorzugten Ausführungsform weist die Reflexionsschicht genau eine elektrisch leitfähige Schicht auf Basis von Silber auf und unterhalb der elektrisch leitfähigen Schicht ist eine untere dielektrische Schicht oder Schichtenfolge angeordnet, deren Brechungsindex mindestens 1,9 beträgt und oberhalb der elektrisch leitfähigen Schicht ist eine obere dielektrische Schicht oder Schichtenfolge angeordnet, deren Brechungsindex mindestens 1,9 beträgt, und das Verhältnis der optischen Dicke der oberen dielektrischen Schicht oder Schichtenfolge zur optischen Dicke der unteren dielektrischen Schicht oder Schichtenfolge beträgt mindestens 1,7. Die Reflexionsschicht kann somit beispielweise wie in der WO 2021/104800 A1 beschrieben aufgebaut sein.

Brechungsindizes sind im Rahmen der vorliegenden Erfindung grundsätzlich bezogen auf eine Wellenlänge von 550 nm angegeben. Methoden zur Bestimmung von Brechungsindizes sind dem Fachmann bekannt. Die im Rahmen der Erfindung angegebenen Brechungsindizes sind beispielsweise mittels Ellipsometrie bestimmbar, wobei kommerziell erhältliche Ellipsometer eingesetzt werden können. Die Angabe von Schichtdicken oder Dicken beziehen sich, sofern nicht anders angegeben, auf die geometrische Dicke einer Schicht.

Ist eine erste Schicht oberhalb einer zweiten Schicht angeordnet, so bedeutet dies im Sinne der Erfindung, dass die erste Schicht weiter von dem Substrat, auf dem die Beschichtung aufgebracht ist, entfernt angeordnet ist als die zweite Schicht. Ist eine erste Schicht unterhalb einer zweiten Schicht angeordnet ist, so bedeutet dies im Sinne der Erfindung, dass die zweite Schicht weiter vom Substrat entfernt angeordnet ist als die erste Schicht.

Ist eine Schicht auf Basis eines Materials ausgebildet, so besteht die Schicht mehrheitlich aus diesem Material, insbesondere im Wesentlichen aus diesem Material neben etwaigen Verunreinigungen oder Dotierungen. Die genannten Oxide und Nitride können stöchiometrisch, unterstöchiometrisch oder überstöchiometrisch abgeschieden sein (auch wenn zum besseren Verständnis eine stöchiometrische Summenformal angegeben ist). Sie können Dotierungen aufweisen, beispielsweise Aluminium, Zirkonium, Titan oder Bor.

Die Verbundscheibe kann zusätzlich eine Beschichtung umfassen, welche als eine Schutzbeschichtung oder eine Antireflexionsbeschichtung ausgebildet ist und auf der von der Klebeschicht wegweisenden Oberfläche der λ/4-Verzögerungsplatte angeordnet ist.

Dem Fachmann sind geeignete Schutzbeschichtungen oder Antireflexionsbeschichtungen bekannt.

Die Außenscheibe und die Innenscheibe sind bevorzugt aus Glas gefertigt, insbesondere aus Kalk-Natron-Glas, was für Fensterscheiben üblich ist. Die Scheiben können grundsätzlich aber auch aus anderen Glasarten (beispielsweise Borosilikatglas, Quarzglas, Aluminosilikatglas) oder transparenten Kunststoffen (beispielsweise Polymethylmethacrylat oder Polycarbonat) gefertigt sein. Die Dicke der Außenscheibe und der Innenscheibe kann breit variieren. Vorzugsweise werden Scheiben mit einer Dicke im Bereich von 0,8 mm bis 5 mm, bevorzugt von 1,4 mm bis 2,5 mm verwendet, beispielsweise die mit den Standarddicken 1,6 mm oder 2,1 mm.

In einer bevorzugten Ausführungsform weist die Innenscheibe eine Dicke von maximal 1,6, mm, besonders bevorzugt von maximal 1,4 mm, ganz besonders bevorzugt von maximal 1,1 mm auf.

Die Außenscheibe, die Innenscheibe und die mindestens eine thermoplastische Zwischenschicht können klar und farblos, aber auch getönt oder gefärbt sein. Die Gesamttransmission durch Windschutzscheibe (samt Reflexionsbeschichtung) beträgt in einer bevorzugten Ausgestaltung im Hauptdurchsichtsbereich größer 70% (Lichtart A). Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben. Die Außenscheibe und die Innenscheibe können unabhängig voneinander nicht vorgespannt, teilvorgespannt oder vorgespannt sein. Soll mindestens eine der Scheiben eine Vorspannung aufweisen, so kann dies eine thermische oder chemische Vorspannung sein.

Bevorzugt ist die Innenscheibe nicht gefärbt oder getönt.

Die Verbundscheibe ist bevorzugt in einer oder in mehreren Richtungen des Raumes gebogen, wie es für Kraftfahrzeugscheiben üblich ist, wobei typische Krümmungsradien im Bereich von etwa 10 cm bis etwa 40 m liegen. Die Verbundscheibe kann aber auch plan sein, beispielsweise wenn es als Scheibe für Busse, Züge oder Traktoren vorgesehen ist.

Die mindestens eine thermoplastische Zwischenschicht enthält zumindest ein thermoplastisches Polymer, bevorzugt Ethylenvinylacetat (EVA), Polyvinylbutyral (PVB) oder Polyurethan (PU) oder Gemische oder Copolymere oder Derivate davon, besonders bevorzugt PVB. Die Dicke der Zwischenschicht beträgt bevorzugt von 0,2 mm bis 2 mm, besonders bevorzugt von 0,3 mm bis 1 mm. Es kann sich bei der mindestens einen thermoplastischen Zwischenschicht auch um eine Folie mit funktionellen Eigenschaften, beispielsweise eine Folie mit akustisch dämpfenden Eigenschaften handeln. Bevorzugt ist die mindestens eine thermoplastische Zwischenschicht von konstanter Dicke, abgesehen von einer etwaigen fachüblichen Oberflächenrauigkeit, d.h. sie weist keinen keilförmigen Querschnitt auf.

Verzögerungsplatten, auch Verzögerungsschichten oder Wellenplatten genannt, sind optische Elemente, die eine Phasenverschiebung des transmittierten Lichts erzeugen. Die gewünschte Verzögerung wird durch die Variation der Dicke sowie der Ausrichtung der Verzögerungsplatte im Strahlengang erreicht. Bei einer Phasenverschiebung von 90° wird von einer λ/4-Platte, Viertelwellenplatte oder auch von einem Zirkularpolarisator gesprochen.

Dem Fachmann sind geeignete λ/4-Verzögerungsplatten bekannt.

λ/4-Verzögerungsplatten bestehen aus doppelbrechenden Materialien. Doppelbrechende Materialien weisen geringfügig voneinander abweichende Brechungsindizes für Licht auf.

In einer bevorzugten Ausführungsform ist die λ/4-Verzögerungsplatte als polymere Verzögerungsplatte ausgeführt. λ/4-Verzögerungsplatten sind in Form doppelbrechender Kunststofffilme kommerziell erhältlich. Polymere Komponenten passen sich sehr gut an eine eventuelle dreidimensionale Biegung der Scheibe an und sind auf einfache Art und Weise in die Verbundscheibe integrierbar.

In einer weiteren bevorzugten Ausführungsform ist die λ/4-Verzögerungsplatte als Verzögerungsplatte aus kristallinem Quarz oder aus Saphir ausgeführt.

λ/4-Verzögerungsplatten werden verwendet, um aus linear polarisiertem Licht zirkular polarisiertes zu erhalten und umgekehrt. Dabei muss die Polarisation des einfallenden Strahls unter 45° zur optischen Achse der Platte stehen. λ/4-Verzögerungsplatten weisen eine Designwellenlänge von ca. 560 nm auf.

Eine erfindungsgemäße Verbundscheibe kann hergestellt werden nach einem Verfahren mindestens umfassend:
a) Bereitstellung eines Verbunds mit einem Projektionsbereich, einem Hauptdurchsichtsbereich, einer Oberkante, einer Unterkante und zwei seitlichen Scheibenkanten, umfassend eine Außenscheibe mit einer außenseitigen Oberfläche und einer innenraumseitigen Oberfläche, mindestens eine thermoplastische Zwischenschicht, eine Reflexionsschicht, eine opake Maskierungsschicht und eine Innenscheibe mit einer außenseitigen Oberfläche und einer innenraumseitigen Oberfläche, wobei die Außenscheibe eine von der mindestens einen thermoplastischen Zwischenschicht abgewandte außenseitige Oberfläche und eine der mindestens einen thermoplastischen Zwischenschicht zugewandte innenraumseitige Oberfläche und die Innenscheibe eine der mindestens einen thermoplastischen Zwischenschicht zugewandte außenseitige Oberfläche und eine von der mindestens einen thermoplastischen Zwischenschicht abgewandte innenraumseitige Oberfläche aufweist, der Projektionsbereich außerhalb des Hauptdurchsichtsbereichs angeordnet ist, die Reflexionsschicht zumindest in dem Projektionsbereich zwischen der Außenscheibe und der Innenscheibe angeordnet ist, die opake Maskierungsschicht zumindest in dem Projektionsbereich zwischen der Außenscheibe und der Innenscheibe angeordnet ist und in Durchsicht durch den Verbund ausgehend von der innenraumseitigen Oberfläche der Innenscheibe räumlich hinter der Reflexionsschicht angeordnet ist;
b) Bereitstellung einer λ/4-Verzögerungsplatte und einer Klebeschicht;
c) Verbinden der λ/4-Verzögerungsplatte mit der innenraumseiteigen Oberfläche der Innenscheibe des Verbunds über die Klebeschicht zu einer Verbundscheibe mit einem Projektionsbereich, einem Hauptdurchsichtsbereich, einer Oberkante, einer Unterkante und zwei seitlichen Scheibenkanten, derart, dass die λ/4-Verzögerungsplatte in einem Bereich der Verbundscheibe angeordnet ist, der bei senkrechter Durchsicht durch die Verbundscheibe vollständig in dem Bereich liegt, in dem die opake Maskierungsschicht angeordnet ist und der Projektionsbereich bei senkrechter Durchsicht durch die Verbundscheibe vollständig in dem Bereich liegt, in dem die λ/4-Verzögerungsplatte angeordnet ist.

Eine erfindungsgemäße Verbundscheibe kann auch hergestellt werden nach einem Verfahren mindestens umfassend:
a) Bereitstellung einer Stapelfolge mit einem Projektionsbereich, einem Hauptdurchsichtsbereich, einer Oberkante, einer Unterkante und zwei seitlichen Scheibenkanten, umfassend eine Außenscheibe mit einer außenseitigen Oberfläche und einer innenraumseitigen Oberfläche, mindestens eine thermoplastische Zwischenschicht, eine Reflexionsschicht, eine opake Maskierungsschicht, eine Innenscheibe mit einer außenseitigen Oberfläche und einer innenraumseitigen Oberfläche, eine Klebeschicht und eine λ/4-Verzögerungsplatte, wobei die Außenscheibe eine von der mindestens einen thermoplastischen Zwischenschicht abgewandte außenseitige Oberfläche und eine der mindestens einen thermoplastischen Zwischenschicht zugewandte innenraumseitige Oberfläche und die Innenscheibe eine der mindestens einen thermoplastischen Zwischenschicht zugewandte außenseitige Oberfläche und eine von der mindestens einen thermoplastischen Zwischenschicht abgewandte innenraumseitige Oberfläche aufweist, der Projektionsbereich außerhalb des Hauptdurchsichtsbereichs angeordnet ist, die Reflexionsschicht zumindest in dem Projektionsbereich zwischen der Außenscheibe und der Innenscheibe angeordnet ist, die opake Maskierungsschicht zumindest in dem Projektionsbereich zwischen der Außenscheibe und der Innenscheibe angeordnet ist und in Durchsicht durch die Verbundscheibe ausgehend von der innenraumseitigen Oberfläche der Innenscheibe räumlich hinter der Reflexionsschicht angeordnet ist, die λ/4-Verzögerungsplatte in einem Bereich der Stapelfolge angeordnet ist, der bei senkrechter Durchsicht durch die Stapelfolge vollständig in dem Bereich liegt, in dem die opake Maskierungsschicht angeordnet ist, die Klebeschicht zwischen der λ/4-Verzögerungsplatte und der innenraumseitigen Oberfläche der Innenscheibe angerordnet und als eine thermoplastische Polymerschicht ausgebildet ist, und der Projektionsbereich bei senkrechter Durchsicht durch die Stapelfolge vollständig in dem Bereich der Stapelfolge liegt, in dem die λ/4-Verzögerungsplatte angeordnet ist;
b) Verbinden der Stapelfolge zu einer Verbundscheibe mit einem Projektionsbereich, einem Hauptdurchsichtsbereich, einer Oberkante, einer Unterkante und zwei seitlichen Scheibenkanten durch Lamination.

Die Erfindung betrifft auch eine Projektionsanordnung, umfassend eine erfindungsgemäße Verbundscheibe und eine Bildanzeigevorrichtung, welche auf den Projektionsbereich der Verbundscheibe gerichtet ist. Die Bildanzeigevorrichtung ist derartig angeordnet, dass die innenraumseitige Oberfläche der Innenscheibe die der Bildanzeigevorrichtung nächstliegende Oberfläche der Innenscheibe ist.

Die Erfindung betrifft somit auch eine Projektionsanordnung, umfassend
- eine Verbundscheibe mit einem Projektionsbereich, einem Hauptdurchsichtsbereich, einer Oberkante, einer Unterkante und zwei seitlichen Scheibenkanten, mindestens umfassend eine Außenscheibe, mindestens eine thermoplastische Zwischenschicht, eine Reflexionsschicht, eine opake Maskierungsschicht, eine Innenscheibe, eine Klebeschicht und eine λ/4-Verzögerungsplatte,
   wobei
   die Außenscheibe eine von der mindestens einen thermoplastischen Zwischenschicht abgewandte außenseitige Oberfläche und eine der mindestens einen thermoplastischen Zwischenschicht zugewandte innenraumseitige Oberfläche und die Innenscheibe eine der mindestens einen thermoplastischen Zwischenschicht zugewandte außenseitige Oberfläche und eine von der mindestens einen thermoplastischen Zwischenschicht abgewandte innenraumseitige Oberfläche aufweist,
   der Projektionsbereich außerhalb des Hauptdurchsichtsbereichs angeordnet ist,
   die Reflexionsschicht zumindest in dem Projektionsbereich zwischen der Außenscheibe und der Innenscheibe angeordnet ist,
   die opake Maskierungsschicht zumindest in dem Projektionsbereich zwischen der Außenscheibe und der Innenscheibe angeordnet ist und in Durchsicht durch die Verbundscheibe ausgehend von der innenraumseitigen Oberfläche der Innenscheibe räumlich hinter der Reflexionsschicht angeordnet ist,
   die λ/4-Verzögerungsplatte über die Klebeschicht mit der innenraumseitigen Oberfläche der Innenscheibe verbunden ist und in einem Bereich der Verbundscheibe angeordnet ist, der bei senkrechter Durchsicht durch die Verbundscheibe vollständig in dem Bereich liegt, in dem die opake Maskierungsschicht angeordnet ist, und
   der Projektionsbereich bei senkrechter Durchsicht durch die Verbundscheibe vollständig in dem Bereich der Verbundscheibe liegt, in dem die λ/4-Verzögerungsplatte angeordnet ist
- und eine Bildanzeigevorrichtung, welche auf den Projektionsbereich gerichtet ist und derartig angeordnet ist, dass die innenraumseitige Oberfläche der Innenscheibe die der Bildanzeigevorrichtung nächstliegende Oberfläche der Innenscheibe ist.

In einer bevorzugten Ausführungsform der erfindungsgemäßen Projektionsanordnung sendet die Bildanzeigevorrichtung s-polarisiertes Licht aus. Dieses trifft zunächst auf die λ/4-Verzögerungsplatte und wird von dieser in zirkular polarisiertes Licht umgewandelt und trifft auf die Reflexionsschicht. Das zirkular polarisierte Licht wird von der Reflexionsschicht reflektiert, wobei sich der Drehsinn ändert. Bevor das reflektierte zirkular polarisierte Licht die Verbundscheibe verlässt, passiert dieses nochmals die λ/4-Verzögerungsplatte und wird in p-polarisiertes Licht umgewandelt. Das p-polarisierte Licht ist auch von einem Betrachter, welcher eine polarisationsselektive Sonnenbrille trägt, gut wahrnehmbar. Dies ist ein Vorteil der erfindungsgemäßen Projektionsanordnung, dass bei Einsatz einer s-polarisierendes Licht aussendenden Bildanzeigevorrichtung p-polarisiertes Licht den Betrachter erreicht.

In einer weiteren bevorzugten Ausführungsform der erfindungsgemäßen Projektionsanordnung sendet die Bildanzeigevorrichtung zirkular polarisiertes Licht aus. Dieses trifft zunächst auf die λ/4-Verzögerungsplatte und wird von dieser in p-polarisiertes Licht umgewandelt und trifft auf die Reflexionsschicht. Das p-polarisierte Licht wird von der Reflexionsschicht reflektiert. Bevor das reflektierte p-polarisierte Licht die Verbundscheibe verlässt, passiert dieses nochmals die λ/4-Verzögerungsplatte und wird in zirkular polarisiertes Licht umgewandelt. Das zirkular polarisierte Licht ist auch von einem Betrachter, welcher eine polarisationsselektive Sonnenbrille trägt, gut wahrnehmbar.

Die vorstehend beschriebenen bevorzugten Ausgestaltungen der erfindungsgemäßen Verbundscheibe gelten entsprechend auch für die erfindungsgemäße Projektionsanordnung umfassend eine erfindungsgemäße Verbundscheibe und eine Bildanzeigevorrichtung und umgekehrt.

Mit dem Begriff p-polarisiertes Licht ist Licht des sichtbaren Spektrums gemeint, das eine p-Polarisation aufweist. Die Betrachtung der Polarisationsrichtung erfolgt dabei bezogen auf die Einfallsebene der Strahlung auf der Verbundscheibe. Als p-polarisierte Strahlung wird eine Strahlung bezeichnet, deren elektrisches Feld in der Einfallsebene schwingt. Als s-polarisierte Strahlung wird eine Strahlung bezeichnet, deren elektrisches Feld senkrecht zur Einfallsebene schwingt. Die Einfallsebene wird durch den Einfallsvektor und die Flächennormale der Verbundscheibe im geometrischen Zentrum des bestrahlten Bereichs aufgespannt. Anders ausgedrückt die Polarisation, also insbesondere der Anteil an p- und s-polarisierter Strahlung, wird an einem Punkt des von der Lichtquelle bestrahlten Bereichs bestimmt, bevorzugt im geometrischen Zentrum des bestrahlten Bereichs. Da Verbundscheiben gekrümmt sein können (beispielweise, wenn sie als Windschutzscheibe ausgebildet sind), was Auswirkungen auf die Einfallsebene der Strahlung hat, können in den übrigen Bereichen leicht davon abweichende Polarisationsanteile auftreten, was aus physikalischen Gründen unvermeidlich ist.

Im Rahmen dieser Anmeldung wird als Projektionsbereich derjenige Bereich bezeichnet, welcher bei Einsatz der Verbundscheibe in einer Projektionsanordnung umfassend die Verbundscheibe und eine Bildanzeigevorrichtung, durch die Bildanzeigevorrichtung bestrahlbar ist. Dieser Bereich schließt den Bereich der Verbundscheibe mit ein, durch welchen das von der Reflexionsschicht reflektierte Licht zum Betrachter reflektiert wird. Der Bereich, durch den ein Fahrzeugführer oder Betrachter hauptsächlich durch die Verbundscheibe sieht, wird im Rahmen dieser Anmeldung als Hauptdurchsichtsbereich bezeichnet.

Im Sinne der vorliegenden Erfindung bedeutet "transparent", dass die Gesamttransmission der Verbundscheibe den gesetzlichen Bestimmungen für Windschutzscheiben entspricht und für sichtbares Licht bevorzugt eine Durchlässigkeit von mehr als 50% und insbesondere von mehr als 60%, beispielsweise mehr als 70%, aufweist. Entsprechend bedeutet "opak" eine Lichttransmission von weniger als 10 %, bevorzugt weniger als 5 % und insbesondere 0%.

Gemäß einer bevorzugten Ausgestaltung der erfindungsgemäßen Projektionsanordnung kann die Bildanzeigevorrichtung, welche beispielsweise ein Projektor oder bevorzugt ein Display sein kann, als Liqiud-crystal- (LCD-) Display, Thin-Film-Transistor- (TFT-) Display, Light-Emitting-Diode- (LED-) Display, Organic-Light-Emitting-Diode- (OLED-) Display, Electroluminescent- (EL-) Display, microLED-Display oder dergleichen, bevorzugt als LCD-Display, ausgebildet sein. Energieintensive Projektoren, wie sie meist bei Head-Up-Display-Anwendungen eingesetzt werden, sind nicht zwingend notwendig. Es genügen die genannten Displayvarianten und andere ähnlich energiesparsame Bildanzeigevorrichtungen. Dies hat zur Folge, dass der Energieverbrauch reduziert werden kann.

Bevorzugt trifft die Strahlung der Bildanzeigevorrichtung mit einem Einfallswinkel von 55° bis 80°, besonders bevorzugt von 62° bis 77°, auf die Verbundscheibe.

Erfindungsgemäß ist auch die Verwendung einer erfindungsgemäßen Verbundscheibe als Fahrzeugscheibe in Fortbewegungsmitteln für den Verkehr auf dem Land, in der Luft oder zu Wasser, insbesondere in Kraftfahrzeugen und insbesondere als Windschutzscheibe für ein Head-Up-Display.

Die Erfindung wird anhand von Zeichnungen und Ausführungsbeispielen näher erläutert. Die Zeichnungen sind schematische Darstellungen und nicht maßstabsgetreu. Die Zeichnungen schränken die Erfindung in keiner Weise ein. Es zeigen:
- Fig. 1: eine Draufsicht auf eine Ausführungsform einer erfindungsgemäßen Verbundscheibe,
- Fig. 2: einen Querschnitt durch die in der Fig. 1 gezeigte Ausführungsform,
- Fig. 3: einen Querschnitt durch eine weitere Ausführungsform einer erfindungsgemäßen Verbundscheibe,
- Fig. 4: einen Querschnitt durch eine weitere Ausführungsform einer erfindungsgemäßen Verbundscheibe,
- Fig. 5: einen Querschnitt durch eine weitere Ausführungsform einer erfindungsgemäßen Verbundscheibe,
- Fig. 6: einen Querschnitt durch eine weitere Ausführungsform einer erfindungsgemäßen Verbundscheibe,
- Fig. 7: einen Querschnitt durch eine weitere Ausführungsform einer erfindungsgemäßen Verbundscheibe,
- Fig. 8: einen Querschnitt durch eine weitere Ausführungsform einer erfindungsgemäßen Verbundscheibe,
- Fig. 9: einen Querschnitt durch eine weitere Ausführungsform einer erfindungsgemäßen Verbundscheibe,
- Fig. 10: einen Querschnitt durch eine weitere Ausführungsform einer erfindungsgemäßen Verbundscheibe,
- Fig. 11: einen Querschnitt durch eine weitere Ausführungsform einer erfindungsgemäßen Verbundscheibe,
- Fig. 12: einen Querschnitt durch eine weitere Ausführungsform einer erfindungsgemäßen Verbundscheibe,
- Fig. 13: einen Querschnitt durch eine erfindungsgemäße Projektionsanordnung,
- Fig. 14: einen Querschnitt durch eine Ausführungsform einer erfindungsgemäßen Projektionsanordnung,
- Fig. 15: einen Querschnitt durch eine Ausführungsform einer erfindungsgemäßen Projektionsanordnung,
- Fig. 16: vergrößerten Ausschnitt eines Querschnitts durch eine Ausführungsform einer erfindungsgemäßen Projektionsanordnung, und
- Fig. 17: einen vergrößerten Ausschnitt eines Querschnitts durch eine weitere Ausführungsform einer erfindungsgemäßen Projektionsanordnung.

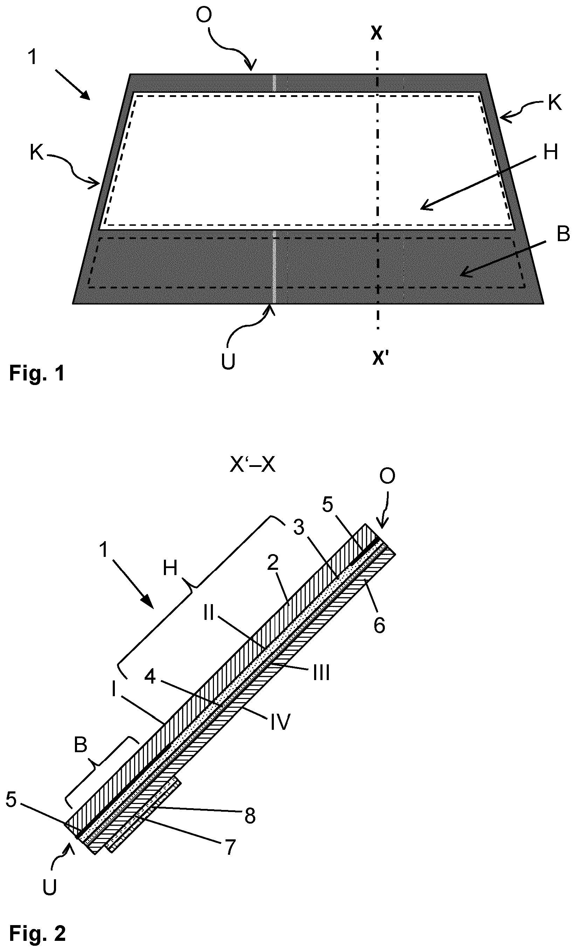

Fig. 1 zeigt eine Draufsicht auf eine Ausführungsform einer erfindungsgemäßen Verbundscheibe 1 und in Fig. 2 ist der Querschnitt durch die in der Fig. 1 gezeigte Verbundscheibe 1 entlang der Schnittlinie X-X' gezeigt. Die in den Fig. 1 und 2 gezeigte Verbundscheibe 1 weist eine Oberkante O, eine Unterkante U und zwei Seitenkanten K auf. Zudem ist in der Fig. 1 der Hauptdurchsichtsbereich H und der Projektionsbereich B der Verbundscheibe 1 eingezeichnet. Die in den Fig. 1 und 2 gezeigte Verbundscheibe 1 umfasst eine Außenscheibe 2 mit einer außenseitigen Oberfläche I und einer innenraumseitigen Oberfläche II, eine Innenscheibe 6 mit einer außenseitigen Oberfläche III und einer innenraumseitigen Oberfläche IV, eine thermoplastische Zwischenschicht 3, eine Reflexionsschicht 4, eine opake Maskierungsschicht 5, eine Klebeschicht 7 und eine λ/4-Verzögerungsplatte 8. Die thermoplastische Zwischenschicht 3 ist zwischen der Außenscheibe 2 und der Innenscheibe 6 angeordnet, die außenseitige Oberfläche I der Außenscheibe 2 ist der thermoplastischen Zwischenschicht 3 abgewandt, die innenraumseitige Oberfläche II der Außenscheibe 2 ist der thermoplastischen Zwischenschicht 3 zugewandt, die außenseitige Oberfläche III der Innenscheibe 6 ist der thermoplastischen Zwischenschicht 3 zugewandt und die innenraumseitige Oberfläche IV der Innenscheibe 6 ist der thermoplastischen Zwischenschicht 3 abgewandt. Die Außenscheibe 2, die thermoplastische Zwischenschicht 3, die Reflexionsschicht 4 und die Innenscheibe 6 sind vollflächig übereinander angeordnet. Der Projektionsbereich B ist außerhalb des Hauptdurchsichtsbereichs H angeordnet. In der in der Fig. 1 und 2 gezeigten Ausführungsform ist der Projektionsbereich B benachbart zur Unterkante U angeordnet. Die opake Maskierungsschicht 5 ist zwischen der Außenscheibe 2 und der Innenscheibe 6 zumindest im Projektionsbereich B angeordnet und in Durchsicht durch die Verbundscheibe 1 ausgehend von der innenraumseitigen Oberfläche IV der Innenscheibe 6 räumlich hinter der Reflexionsschicht 4 angeordnet. In der in der Fig. 1 und 2 gezeigten Ausführungsform ist die opake Maskierungsschicht 5 als ein auf der innenraumseitigen Oberfläche II der Außenscheibe 2 angeordneter opaker Abdeckdruck ausgebildet und in einem umlaufenden Randbereich angeordnet, der in einem Abschnitt, der in Überdeckung zum Projektionsbereich B ist, eine größere Breite aufweist als in hiervon verschiedenen Abschnitten. Die λ/4-Verzögerungsplatte 8 ist über die Klebeschicht 7 mit der innenraumseitigen Oberfläche IV der Innenscheibe 6 verbunden und in einem Bereich der Verbundscheibe 1 angeordnet, der bei senkrechter Durchsicht durch die Verbundscheibe 1 vollständig in dem Bereich liegt, in dem die opake Maskierungsschicht 5 angeordnet ist. Der Projektionsbereich B liegt bei senkrechter Durchsicht durch die Verbundscheibe 1 vollständig in dem Bereich der Verbundscheibe 1, in dem die λ/4-Verzögerungsplatte angeordnet ist.

Die thermoplastischen Zwischenschicht 3 ist beispielsweise eine aus PVB bestehende Zwischenschicht und weist eine Dicke von 0,76 mm auf. Die thermoplastische Zwischenschicht 3 weist eine im Wesentlichen konstante Dicke auf, abgesehen von einer etwaigen fachüblichen Oberflächenrauigkeit - sie ist nicht als sogenannte Keilfolie ausgebildet.

Die Außenscheibe 2 und die Innenscheibe 6 bestehen beispielsweise aus Kalk-Natron-Glas. Die Außenscheibe 2 weist beispielsweise eine Dicke von 2,1 mm auf, die Innenscheibe 6 weist beispielsweise eine Dicke von 1,6 mm oder von 1,1 mm auf.

Die Klebeschicht 7 ist beispielsweise ein optisch klarer Kleber (OCA). Alternativ kann die Klebeschicht 7 auch eine thermoplastische Polymerschicht, beispielsweise eine aus PVB bestehende Schicht mit einer Dicke von beispielsweise 0,38 mm sein.

In der in den Fig. 1 und 2 gezeigten Ausführungsform ist auf der außenseitigen Oberfläche III der Innenscheibe 6 vollflächig eine Reflexionsschicht 4, welche beispielsweise als ein Dünnschichtstapel umfassend mindestens eine elektrisch leitfähige Schicht auf Basis von Silber ausgebildet ist, aufgebracht.

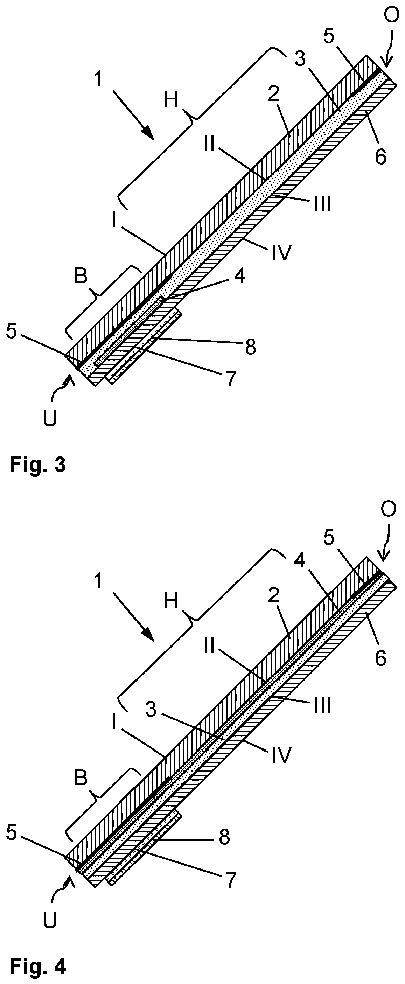

Fig. 3 zeigt einen Querschnitt durch eine weitere Ausführungsform einer erfindungsgemäßen Verbundscheibe 1. Die in der Fig. 3 gezeigte Ausführungsform unterscheidet sich von der in der Fig. 2 gezeigten nur dahingehend, dass die Reflexionsschicht 4 nur in einem Bereich der Verbundscheibe 1 angeordnet ist, der bei senkrechter Durchsicht durch die Verbundscheibe 1 vollständig in dem Bereich liegt, in dem die opake Maskierungsschicht 5 angeordnet ist. In dieser Ausführungsform kann die Reflexionsschicht 4 als Beschichtung der außenseitigen Oberfläche III der Innenscheibe 6 oder als eine zwischen der thermoplastischen Zwischenschicht 3 und der Innenscheibe 6 angeordnete reflektierende Folie ausgebildet sein.

Fig. 4 zeigt einen Querschnitt durch eine weitere Ausführungsform einer erfindungsgemäßen Verbundscheibe 1. Die in der Fig. 4 gezeigte Ausführungsform unterscheidet sich von der in der Fig. 2 gezeigten nur dahingehend, dass die Reflexionsschicht 4 nicht zwischen der thermoplastischen Zwischenschicht 3 und der Innenscheibe 6, sondern zwischen der thermoplastischen Zwischenschicht 3 und der Außenscheibe 2 angeordnet ist, mit der Maßgabe, dass die opake Maskierungsschicht 5 in Durchsicht durch die Verbundscheibe 1 ausgehend von der innenraumseitigen Oberfläche IV der Innenscheibe 6 räumlich hinter der Reflexionsschicht 4 angeordnet ist. Die beispielsweise als Beschichtung der innenraumseitigen Oberfläche II Außenscheibe 2 ausgebildete Reflexionsschicht 4 ist in den Bereichen, in denen die opake Maskierungsschicht 5 als opaker Abdeckdruck auf der innenraumseitigen Oberfläche II der Außenscheibe 2 angeordnet ist, somit nicht direkt auf der Außenscheibe 2, sondern auf der opaken Maskierungsschicht 5 angeordnet.

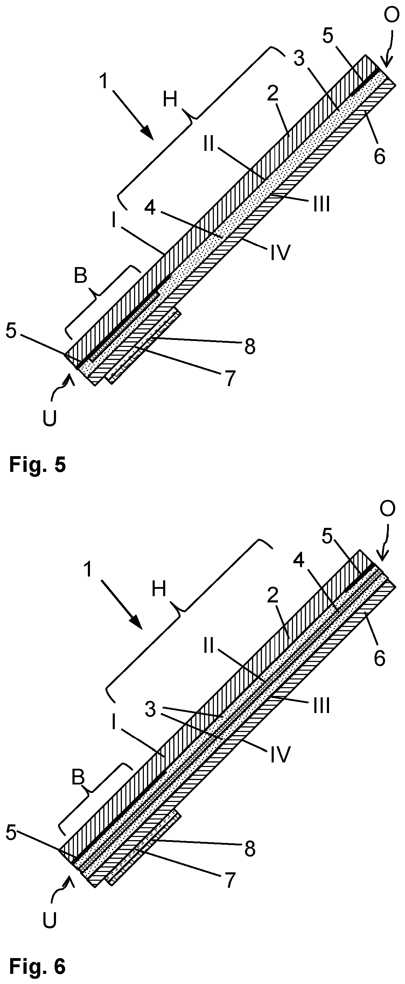

Fig. 5 zeigt einen Querschnitt durch eine weitere Ausführungsform einer erfindungsgemäßen Verbundscheibe 1. Die in der Fig. 5 gezeigte Ausführungsform unterscheidet sich von der in der Fig. 4 gezeigten nur dahingehend, dass die Reflexionsschicht 4 nur in einem Bereich der Verbundscheibe 1 angeordnet ist, der bei senkrechter Durchsicht durch die Verbundscheibe 1 vollständig in dem Bereich liegt, in dem die opake Maskierungsschicht 5 angeordnet ist. In dieser Ausführungsform kann die Reflexionsschicht 4 als Beschichtung der innenraumseitigen Oberfläche II der Außenscheibe 2 oder als eine zwischen der thermoplastischen Zwischenschicht 3 und der Außenscheibe 2 angeordnete reflektierende Folie ausgebildet sein, mit der Maßgabe, dass die opake Maskierungsschicht 5 in Durchsicht durch die Verbundscheibe 1 ausgehend von der innenraumseitigen Oberfläche IV der Innenscheibe 6 räumlich hinter der Reflexionsschicht 4 angeordnet ist. Eine als Beschichtung der innenraumseitigen Oberfläche II Außenscheibe 2 ausgebildete Reflexionsschicht 4 ist somit nicht direkt auf der Außenscheibe 2, sondern auf der opaken Maskierungsschicht 5 angeordnet.

Fig. 6 zeigt einen Querschnitt durch eine weitere Ausführungsform einer erfindungsgemäßen Verbundscheibe 1. Die in der Fig. 6 gezeigte Ausführungsform unterscheidet sich von der in der Fig. 2 gezeigten nur dahingehend, dass die Verbundscheibe 1 zwei thermoplastische Zwischenschichten 3 aufweist und die Reflexionsschicht 4 zwischen den beiden thermoplastischen Zwischenschichten 3 angeordnet ist. In dieser Ausführungsform kann die Reflexionsschicht 4 als Beschichtung einer der zwei thermoplastischen Zwischenschichten 3 oder als eine zwischen den beiden thermoplastischen Zwischenschichten 3 angeordnete reflektierende Folie ausgebildet sein.

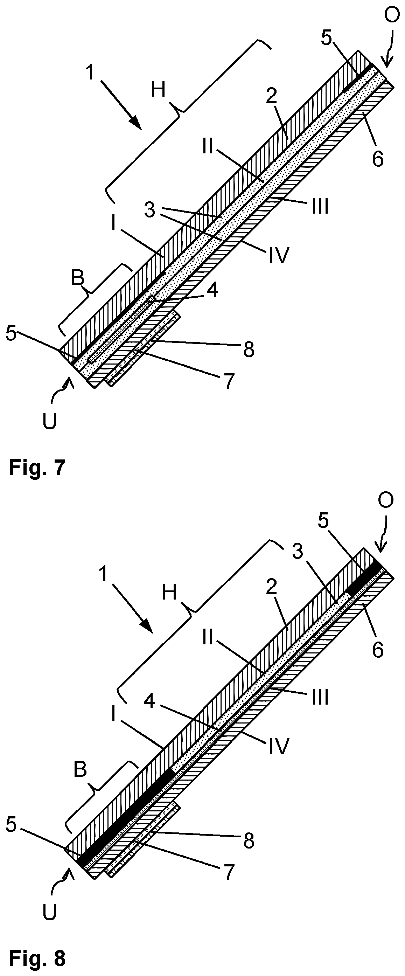

Fig. 7 zeigt einen Querschnitt durch eine weitere Ausführungsform einer erfindungsgemäßen Verbundscheibe 1. Die in der Fig. 7 gezeigte Ausführungsform unterscheidet sich von der in der Fig. 3 gezeigten nur dahingehend, dass die Verbundscheibe 1 zwei thermoplastische Zwischenschichten 3 aufweist und die Reflexionsschicht 4 zwischen den beiden thermoplastischen Zwischenschichten 3 angeordnet ist. In dieser Ausführungsform kann die Reflexionsschicht 4 als Beschichtung einer der zwei thermoplastischen Zwischenschichten 3 oder als eine zwischen den beiden thermoplastischen Zwischenschichten 3 angeordnete reflektierende Folie ausgebildet sein.

Fig. 8 zeigt einen Querschnitt durch eine weitere Ausführungsform einer erfindungsgemäßen Verbundscheibe 1. Die in der Fig. 8 gezeigte Ausführungsform unterscheidet sich von der in der Fig. 2 gezeigten nur dahingehend, dass die opake Maskierungsschicht 5 nicht als ein opaker Abdeckdruck auf der innenraumseitigen Oberfläche II der Außenscheibe 2, sondern als ein opak gefärbter Bereich der thermoplastischen Zwischenschicht 3 ausgebildet ist.

In dem an die Oberkante O angrenzenden Bereich kann die thermoplastische Zwischenschicht 3 alternativ auch keine Färbung aufweisen und optional ein opaker Abdeckdruck auf der innenraumseitigen Oberfläche II der Außenscheibe 2, auf der außenseitigen Oberfläche III der Innenscheibe 6 oder auf der innenraumseitigen Oberfläche IV der Innenscheibe 6 aufgebracht sein.

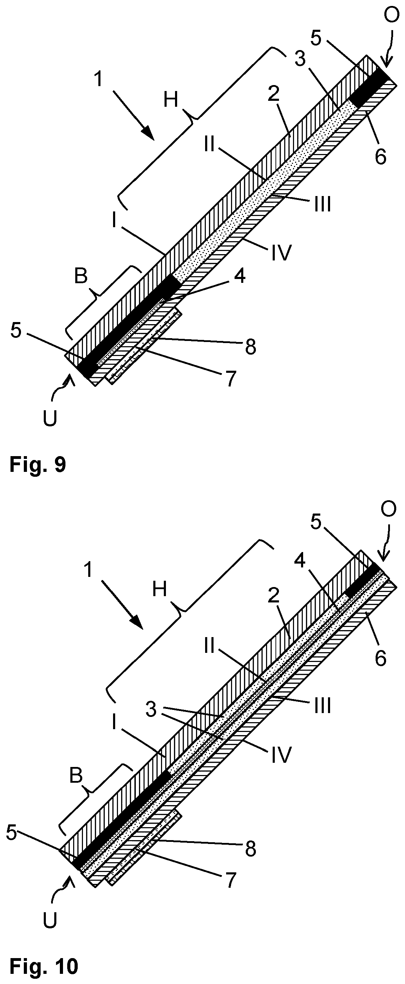

Fig. 9 zeigt einen Querschnitt durch eine weitere Ausführungsform einer erfindungsgemäßen Verbundscheibe 1. Die in der Fig. 9 gezeigte Ausführungsform unterscheidet sich von der in der Fig. 8 gezeigten nur dahingehend, dass die Reflexionsschicht 4 nur in einem Bereich der Verbundscheibe 1 angeordnet ist, der bei senkrechter Durchsicht durch die Verbundscheibe 1 vollständig in dem Bereich liegt, in dem die opake Maskierungsschicht 5 angeordnet ist. In dieser Ausführungsform kann die Reflexionsschicht 4 als Beschichtung der außenseitigen Oberfläche III der Innenscheibe 6 oder als eine zwischen der thermoplastischen Zwischenschicht 3 und der Innenscheibe 6 angeordnete reflektierende Folie ausgebildet sein.

Fig. 10 zeigt einen Querschnitt durch eine weitere Ausführungsform einer erfindungsgemäßen Verbundscheibe 1. Die in der Fig. 10 gezeigte Ausführungsform unterscheidet sich von der in der Fig. 6 gezeigten nur dahingehend, dass die opake Maskierungsschicht 5 nicht als ein opaker Abdeckdruck auf der innenraumseitigen Oberfläche II der Außenscheibe 2, sondern als ein opak gefärbter Bereich der der Außenscheibe 2 nächstgelegenen thermoplastischen Zwischenschicht 3 ausgebildet ist.

In dem an die Oberkante O angrenzenden Bereich kann die der Außenscheibe 2 nächstgelegene thermoplastische Zwischenschicht 3 alternativ auch keine Färbung aufweisen und optional ein opaker Abdeckdruck auf der innenraumseitigen Oberfläche II der Außenscheibe 2, auf der außenseitigen Oberfläche III der Innenscheibe 6 oder auf der innenraumseitigen Oberfläche IV der Innenscheibe 6 aufgebracht sein.

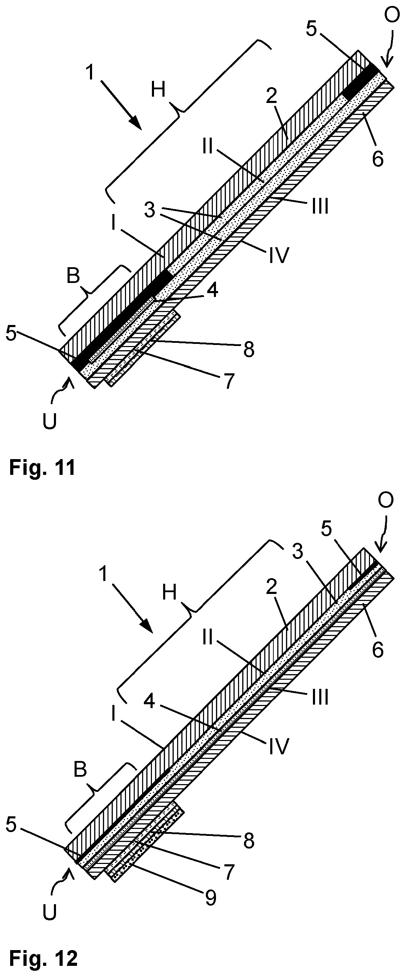

Fig. 11 zeigt einen Querschnitt durch eine weitere Ausführungsform einer erfindungsgemäßen Verbundscheibe 1. Die in der Fig. 11 gezeigte Ausführungsform unterscheidet sich von der in der Fig. 10 gezeigten nur dahingehend, dass die Reflexionsschicht 4 nur in einem Bereich der Verbundscheibe 1 angeordnet ist, der bei senkrechter Durchsicht durch die Verbundscheibe 1 vollständig in dem Bereich liegt, in dem die opake Maskierungsschicht 5 angeordnet ist. In dieser Ausführungsform kann die Reflexionsschicht 4 als Beschichtung einer der zwei thermoplastischen Zwischenschichten 3 oder als eine zwischen den beiden thermoplastischen Zwischenschichten 3 angeordnete reflektierende Folie ausgebildet sein.

Fig. 12 zeigt einen Querschnitt durch eine weitere Ausführungsform einer erfindungsgemäßen Verbundscheibe 1. Die in der Fig. 12 gezeigte Ausführungsform unterscheidet sich von der in der Fig. 2 gezeigten nur dahingehend, dass auf der von der Klebeschicht 7 wegweisenden Oberfläche der λ/4-Verzögerungsplatte 8 eine Beschichtung 9 angeordnet ist, welche als eine Schutzbeschichtung oder eine Antireflexionsbeschichtung ausgebildet ist.

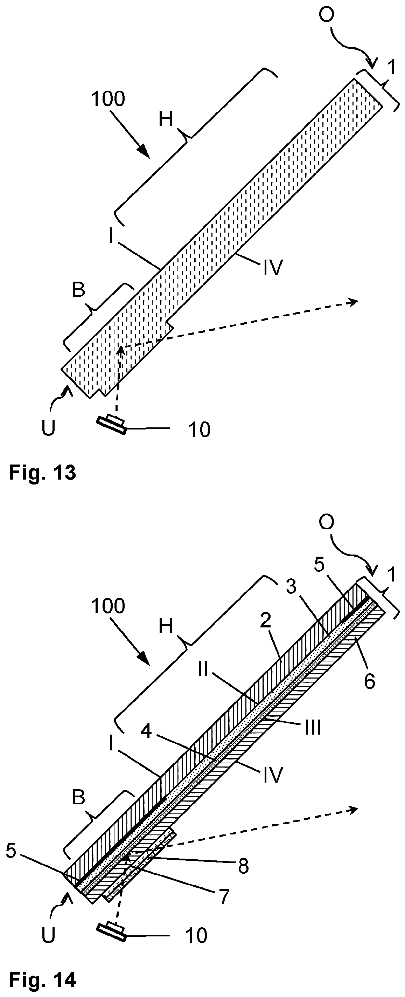

Fig. 13 zeigt einen Querschnitt durch eine erfindungsgemäßen Projektionsanordnung 100. Die in der Fig. 13 gezeigte Projektionsanordnung 100 umfasst eine erfindungsgemäße Verbundscheibe 1 und eine Bildanzeigevorrichtung 10. Die erfindungsgemäße Verbundscheibe 1 ist beispielsweise wie in den Fig. 2 bis 12 gezeigt ausgebildet. Die Bildanzeigevorrichtung 10 ist auf den Projektionsbereich B gerichtet und derartig angeordnet, dass die innenraumseitige Oberfläche IV der Innenscheibe 6 die der Bildanzeigevorrichtung 10 nächstliegende Oberfläche der Innenscheibe 6 ist.

Fig. 14 zeigt einen Querschnitt durch eine Ausführungsform einer erfindungsgemäßen Projektionsanordnung 100, umfassend eine Verbundscheibe 1 und eine Bildanzeigevorrichtung 10. Die Verbundscheibe 1 ist wie in der Fig. 2 gezeigt ausgebildet. Die Verbundscheibe 1 der in der Fig. 14 gezeigten Projektionsanordnung 100 weist eine Oberkante O, eine Unterkante U und zwei Seitenkanten K auf. Zudem ist in der Fig. 14 der Hauptdurchsichtsbereich H und der Projektionsbereich B der Verbundscheibe 1 eingezeichnet. In der in der Fig. 14 gezeigten Ausführungsform einer Projektionsanordnung 100 umfasst die Verbundscheibe 1 eine Außenscheibe 2 mit einer außenseitigen Oberfläche I und einer innenraumseitigen Oberfläche II, eine Innenscheibe 6 mit einer außenseitigen Oberfläche III und einer innenraumseitigen Oberfläche IV, eine thermoplastische Zwischenschicht 3, eine Reflexionsschicht 4, eine opake Maskierungsschicht 5, eine Klebeschicht 7 und eine λ/4-Verzögerungsplatte 8. Die thermoplastische Zwischenschicht 3 ist zwischen der Außenscheibe 2 und der Innenscheibe 6 angeordnet, die außenseitige Oberfläche I der Außenscheibe 2 ist der thermoplastischen Zwischenschicht 3 abgewandt, die innenraumseitige Oberfläche II der Außenscheibe 2 ist der thermoplastischen Zwischenschicht 3 zugewandt, die außenseitige Oberfläche III der Innenscheibe 6 ist der thermoplastischen Zwischenschicht zugewandt und die innenraumseitige Oberfläche IV der Innenscheibe 6 ist der thermoplastischen Zwischenschicht abgewandt. Die Außenscheibe 2, die thermoplastische Zwischenschicht 3, die Reflexionsschicht 4 und die Innenscheibe 6 sind vollflächig übereinander angeordnet. Der Projektionsbereich B ist außerhalb des Hauptdurchsichtsbereichs H angeordnet. In der in der Fig. 14 gezeigten Ausführungsform ist der Projektionsbereich B benachbart zur Unterkante U angeordnet. Die opake Maskierungsschicht 5 ist zwischen der Außenscheibe 2 und der Innenscheibe 6 zumindest im Projektionsbereich B angeordnet und in Durchsicht durch die Verbundscheibe 1 ausgehend von der innenraumseitigen Oberfläche IV der Innenscheibe 6 räumlich hinter der Reflexionsschicht 4 angeordnet. Die opake Maskierungsschicht 5 ist als ein auf der innenraumseitigen Oberfläche II der Außenscheibe 2 angeordneter opaker Abdeckdruck ausgebildet und in einem umlaufenden Randbereich angeordnet, der in einem Abschnitt, der in Überdeckung zum Projektionsbereich B ist, eine größere Breite aufweist als in hiervon verschiedenen Abschnitten. Die λ/4-Verzögerungsplatte ist über die Klebeschicht 7 mit der innenraumseitigen Oberfläche IV der Innenscheibe 6 verbunden und in einem Bereich der Verbundscheibe 1 angeordnet, der bei senkrechter Durchsicht durch die Verbundscheibe 1 vollständig in dem Bereich liegt, in dem die opake Maskierungsschicht 5 angeordnet ist. Der Projektionsbereich B liegt bei senkrechter Durchsicht durch die Verbundscheibe 1 vollständig in dem Bereich der Verbundscheibe 1, in dem die λ/4-Verzögerungsplatte 8 angeordnet ist.

Die thermoplastischen Zwischenschicht 3 ist beispielsweise eine aus PVB bestehende Zwischenschicht und weist eine Dicke von 0,76 mm auf. Die thermoplastische Zwischenschicht 3 weist eine im Wesentlichen konstante Dicke auf, abgesehen von einer etwaigen fachüblichen Oberflächenrauigkeit - sie ist nicht als sogenannte Keilfolie ausgebildet.

Die Außenscheibe 2 und die Innenscheibe 6 bestehen beispielsweise aus Kalk-Natron-Glas. Die Außenscheibe 2 weist beispielsweise eine Dicke von 2,1 mm auf, die Innenscheibe 6 weist beispielsweise eine Dicke von 1,6 mm oder von 1,1 mm auf.

Die Klebeschicht 7 ist beispielsweise ein optisch klarer Kleber (OCA). Alternativ kann die Klebeschicht 7 auch eine thermoplastische Polymerschicht, beispielsweise eine aus PVB bestehende Schicht mit einer Dicke von beispielsweise 0,38 mm sein.

In der in der Fig. 14 gezeigten Ausführungsform ist auf der außenseitigen Oberfläche III der Innenscheibe 6 vollflächig eine Reflexionsschicht 4, welche beispielsweise als ein Dünnschichtstapel umfassend mindestens eine elektrisch leitfähige Schicht auf Basis von Silber ausgebildet ist, aufgebracht.

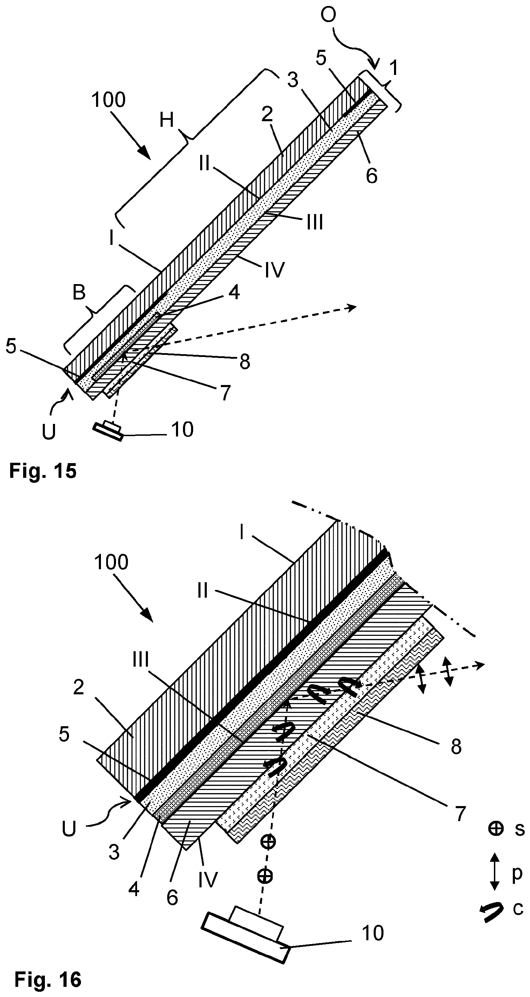

Fig. 15 zeigt einen Querschnitt durch eine weitere Ausführungsform einer erfindungsgemäßen Projektionsanordnung 100, wobei sich die in der Fig. 15 gezeigte Ausführungsform von der in der Fig. 14 nur dahingehend unterscheidet, dass die Reflexionsschicht 4 nur in einem Bereich der Verbundscheibe 1 angeordnet ist, der bei senkrechter Durchsicht durch die Verbundscheibe 1 vollständig in dem Bereich liegt, in dem die opake Maskierungsschicht 5 angeordnet ist. In dieser Ausführungsform kann die Reflexionsschicht 4 als Beschichtung der außenseitigen Oberfläche III der Innenscheibe 6 oder als eine zwischen der thermoplastischen Zwischenschicht 3 und der Innenscheibe 6 angeordnete reflektierende Folie ausgebildet sein. Die Verbundscheibe 1 ist in der in der Fig. 15 gezeigten Ausführungsform somit wie in der Fig. 3 gezeigt ausgebildet.

Fig. 16 zeigt einen vergrößerten Ausschnitt eines Querschnitts durch eine Ausführungsform einer erfindungsgemäßen Projektionsanordnung 100 umfassend eine Verbundscheibe 1 und eine Bildanzeigevorrichtung 10, wobei der Strahlengang des von der Bildanzeigevorrichtung 10 ausgesendeten Lichts näher dargestellt ist. Die Verbundscheibe 1 ist wie in den Fig. 1 und 2 gezeigt ausgebildet. Die Bildanzeigevorrichtung 10 sendet s-polarisiertes Licht aus. Dieses trifft zunächst auf die λ/4-Verzögerungsplatte 8 und wird von dieser in zirkular polarisiertes Licht umgewandelt und trifft auf die Reflexionsschicht 4. Das zirkular polarisierte Licht wird von der Reflexionsschicht 8 reflektiert, wobei sich der Drehsinn ändert. Bevor das reflektierte zirkular polarisierte Licht die Verbundscheibe 1 verlässt, passiert dieses nochmals λ/4-Verzögerungsplatte 8 und wird in p-polarisiertes Licht umgewandelt. Da nur p-polarisiertes Licht aus der Verbundscheibe 1 austritt, ist die Reflexion auch von einem Betrachter, welcher eine polarisationsselektive Sonnenbrille trägt, gut wahrnehmbar.

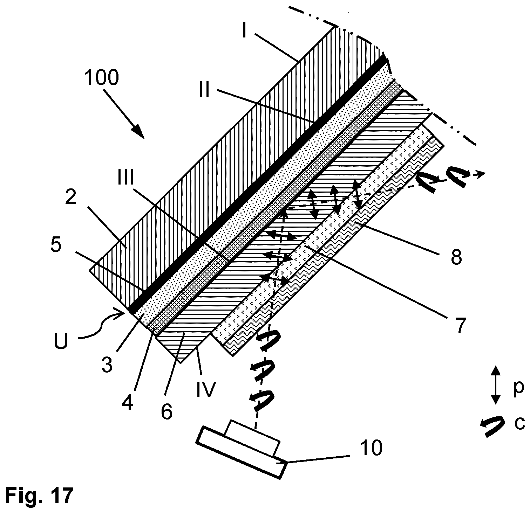

Fig. 17 zeigt einen vergrößerten Ausschnitt eines Querschnitts durch eine weitere Ausführungsform einer erfindungsgemäßen Projektionsanordnung 100 umfassend eine Verbundscheibe 1 und eine Bildanzeigevorrichtung 10, wobei der Strahlengang des von der Bildanzeigevorrichtung 10 ausgesendeten Lichts näher dargestellt ist. Die Verbundscheibe 1 ist wie in den Fig. 1 und 2 gezeigt ausgebildet. Die Bildanzeigevorrichtung 10 sendet zirkular polarisiertes Licht aus. Dieses trifft zunächst auf die λ/4-Verzögerungsplatte 8 und wird von dieser in p-polarisiertes Licht umgewandelt und trifft auf die Reflexionsschicht 4. Das p-polarisierte Licht wird von der Reflexionsschicht 4 reflektiert. Bevor das reflektierte p-polarisierte Licht die Verbundscheibe 1 verlässt, passiert dieses nochmals die λ/4-Verzögerungsplatte 8 und wird in zirkular polarisiertes Licht umgewandelt. Das zirkular polarisierte Licht ist auch von einem Betrachter, welcher eine polarisationsselektive Sonnenbrille trägt, gut wahrnehmbar.

### Bezugszeichenliste:

- 1: Verbundscheibe
- 2: Außenscheibe
- 3: thermoplastische Zwischenschicht
- 4: Reflexionsschicht
- 5: opake Maskierungsschicht
- 6: Innenscheibe
- 7: Klebeschicht
- 8: λ/4-Verzögerungsplatte
- 9: Beschichtung
- 10: Bildanzeigevorrichtung

- 100: Projektionsanordnung

- O: Oberkante
- U: Unterkante
- K: Seitenkante
- B: Projektionsbereich
- H: Hauptdurchsichtsbereich

- I: außenseitige Oberfläche der Außenscheibe 2
- II: innenraumseitige Oberfläche der Außenscheibe 2
- III: außenseitige Oberfläche der Innenscheibe 6
- IV: innenraumseitige Oberfläche der Innenscheibe 6

- X'-X: Schnittlinie

- s: s-polarisiertes Licht
- p: p-polarisiertes Licht
- c: zirkular polarisiertes Licht

## Patentansprüche

1. Verbundscheibe (1) mit einem Projektionsbereich (B), einem Hauptdurchsichtsbereich (H), einer Oberkante (O), einer Unterkante (U) und zwei seitlichen Scheibenkanten (K), mindestens umfassend eine Außenscheibe (2), mindestens eine thermoplastische Zwischenschicht (3), eine Reflexionsschicht (4), eine opake Maskierungsschicht (5),
eine Innenscheibe (6), eine Klebeschicht (7) und eine λ/4-Verzögerungsplatte (8),
wobei
die Außenscheibe (2) eine von der mindestens einen thermoplastischen Zwischenschicht (3) abgewandte außenseitige Oberfläche (I) und eine der mindestens einen thermoplastischen Zwischenschicht (3) zugewandte innenraumseitige Oberfläche (II) und die Innenscheibe (6) eine der mindestens einen thermoplastischen Zwischenschicht (3) zugewandte außenseitige Oberfläche (III) und eine von der mindestens einen thermoplastischen Zwischenschicht (3) abgewandte innenraumseitige Oberfläche (IV) aufweist,
der Projektionsbereich (B) außerhalb des Hauptdurchsichtsbereichs (H) angeordnet ist, die Reflexionsschicht (4) zumindest in dem Projektionsbereich (B) zwischen der Außenscheibe (2) und der Innenscheibe (6) angeordnet ist,
die opake Maskierungsschicht (5) zumindest in dem Projektionsbereich (B) zwischen der Außenscheibe (2) und der Innenscheibe (6) angeordnet ist und in Durchsicht durch die Verbundscheibe (1) ausgehend von der innenraumseitigen Oberfläche (IV) der Innenscheibe (6) räumlich hinter der Reflexionsschicht (4) angeordnet ist,
die λ/4-Verzögerungsplatte (8) über die Klebeschicht (7) mit der innenraumseitigen Oberfläche (IV) der Innenscheibe (6) verbunden ist und in einem Bereich der Verbundscheibe (1) angeordnet ist, der bei senkrechter Durchsicht durch die Verbundscheibe (1) vollständig in dem Bereich liegt, in dem die opake Maskierungsschicht (5) angeordnet ist, und
der Projektionsbereich (B) bei senkrechter Durchsicht durch die Verbundscheibe (1) vollständig in dem Bereich der Verbundscheibe (1) liegt, in dem die λ/4-Verzögerungsplatte (8) angeordnet ist.

2. Verbundscheibe (1) nach Anspruch 1, wobei die Reflexionsschicht (4) im Wesentlichen vollflächig zwischen der Außenscheibe (2) und der Innenscheibe (6) angeordnet ist.

3. Verbundscheibe (1) nach Anspruch 1, wobei die Reflexionsschicht (4) zwischen der Außenscheibe (2) und der Innenscheibe (6) in einem Bereich der Verbundscheibe (1) angeordnet ist, der bei senkrechter Durchsicht durch die Verbundscheibe (1) vollständig in dem Bereich liegt, in dem die opake Maskierungsschicht (5) angeordnet ist.

4. Verbundscheibe (1) nach einem der Ansprüche 1 bis 3, wobei die Reflexionsschicht (4) zwischen der Innenscheibe (6) und der mindestens einen thermoplastischen Zwischenschicht (3) oder zwischen der Außenscheibe (2) und der mindestens einen thermoplastischen Zwischenschicht (3) angeordnet ist oder wobei die Verbundscheibe (1) mindestens zwei thermoplastische Zwischenschichten (3) umfasst und die Reflexionsschicht (4) zwischen zwei der thermoplastischen Zwischenschichten (3) angeordnet ist.

5. Verbundscheibe (1) nach einem der Ansprüche 1 bis 4, wobei die Klebeschicht (7) eine thermoplastische Polymerschicht oder ein optisch klarer Kleber ist.

6. Verbundscheibe (1) nach einem der Ansprüche 1 bis 5, wobei der Projektionsbereich (B) benachbart zur Unterkante (U) der Verbundscheibe (1) angeordnet ist.

7. Verbundscheibe (1) nach einem der Ansprüche 1 bis 6, wobei die opake Maskierungsschicht (5) zumindest teilweise in einem umlaufenden Randbereich angeordnet ist und insbesondere in einem Abschnitt, der in Überdeckung zum Projektionsbereich (B) ist, eine größere Breite aufweist als in hiervon verschiedenen Abschnitten.

8. Verbundscheibe (1) nach einem der Ansprüche 1 bis 7, wobei die opake Maskierungsschicht (5) als ein opaker Abdeckdruck auf der innenraumseitigen Oberfläche (II) der Außenscheibe (2) oder als ein opak gefärbter Bereich der mindestens einen thermoplastischen Zwischenschicht (3) ausgebildet ist.

9. Verbundscheibe (1) nach einem der Ansprüche 1 bis 8, wobei die Reflexionsschicht (4) als eine reflektierende Beschichtung oder als eine reflektierende Folie ausgebildet ist.

10. Verbundscheibe (1) nach einem der Ansprüche 1 bis 9, zusätzlich umfassend eine Beschichtung (9), welche als eine Schutzbeschichtung oder eine Antireflexionsbeschichtung ausgebildet ist und auf der von der Klebeschicht (7) wegweisenden Oberfläche der λ/4-Verzögerungsplatte (8) angeordnet ist.

11. Projektionsanordnung (100) mindestens umfassend
- eine Verbundscheibe (1) nach einem der Ansprüche 1 bis 10, und
- eine Bildanzeigevorrichtung (10), welche auf den Projektionsbereich (B) gerichtet ist und derartig angeordnet ist, dass die innenraumseitige Oberfläche (IV) der Innenscheibe (6) die der Bildanzeigevorrichtung (10) nächstliegende Oberfläche der Innenscheibe (6) ist.

12. Projektionsanordnung (100) nach Anspruch 11, wobei die Bildanzeigevorrichtung (10) ein Projektor oder ein Display, bevorzugt ein LCD-Display, LED-Display, microLED-Display, OLED-Display oder elektrolumineszentes Display, besonders bevorzugt ein LCD-Display, ist und die Strahlung bevorzugt mit einem Einfallswinkel von 55° bis 80° auf die Verbundscheibe (1) trifft, besonders bevorzugt von 62° bis 77°.

13. Projektionsanordnung (100) nach Anspruch 11 oder 12, wobei die Bildanzeigevorrichtung (10) s-polarisiertes Licht aussendet.

14. Projektionsanordnung (100) nach Anspruch 11 oder 12, wobei die Bildanzeigevorrichtung (10) zirkular polarisiertes Licht aussendet.

15. Verwendung einer Verbundscheibe (1) nach einem der Ansprüche 1 bis 10 als Fahrzeugscheibe in Fortbewegungsmitteln für den Verkehr auf dem Land, in der Luft oder zu Wasser, insbesondere in Kraftfahrzeugen und insbesondere als Windschutzscheibe für ein Head-Up-Display.

## Claims

1. A laminated pane (1) having a projection region (B), a main see-through region (H), an upper edge (O), a lower edge (U) and two lateral pane edges (K), at least comprising an outer pane (2), at least one thermoplastic intermediate layer (3), a reflective layer (4), an opaque masking layer (5), an inner pane (6), an adhesive layer (7), and a λ/4 retardation plate (8),
wherein
the outer pane (2) has an outer-side surface (I) facing away from the at least one thermoplastic intermediate layer (3), and an interior-side surface (II) facing the at least one thermoplastic intermediate layer (3), and the inner pane (6) has an outer-side surface (III) facing the at least one thermoplastic intermediate layer (3), and an interior-side surface (IV) facing away from the at least one thermoplastic intermediate layer (3),
the projection region (B) is arranged outside the main see-through region (H), the reflective layer (4) is arranged at least in the projection region (B) between the outer pane (2) and the inner pane (6),
the opaque masking layer (5) is arranged at least in the projection region (B) between the outer pane (2) and the inner pane (6) and, when viewed through the laminated pane (1), is arranged spatially behind the reflective layer (4), starting from the interior-side surface (IV) of the inner pane (6),
the λ/4 retardation plate (8) is connected via the adhesive layer (7) to the interior-side surface (IV) of the inner pane (6) and is arranged in a region of the laminated pane (1) which, when viewed perpendicularly through the laminated pane (1), lies completely in the region in which the opaque masking layer (5) is arranged, and
the projection region (B) lies completely in the region of the laminated pane (1) in which the λ/4 retardation plate (8) is arranged, when viewed perpendicularly through the laminated pane (1).

2. The laminated pane (1) according to claim 1, wherein the reflective layer (4) is arranged substantially over the entire surface between the outer pane (2) and the inner pane (6).

3. The laminated pane (1) according to claim 1, wherein the reflective layer (4) is arranged between the outer pane (2) and the inner pane (6) in a region of the laminated pane (1) which, when viewed perpendicularly through the laminated pane (1), lies completely in the region in which the opaque masking layer (5) is arranged.

4. The laminated pane (1) according to any of claims 1 to 3, wherein the reflective layer (4) is arranged between the inner pane (6) and the at least one thermoplastic intermediate layer (3) or between the outer pane (2) and the at least one thermoplastic intermediate layer (3), or wherein the laminated pane (1) comprises at least two thermoplastic intermediate layers (3) and the reflective layer (4) is arranged between two of the thermoplastic intermediate layers (3).

5. The laminated pane (1) according to any of claims 1 to 4, wherein the adhesive layer (7) is a thermoplastic polymer layer or an optically clear adhesive.

6. The laminated pane (1) according to any of claims 1 to 5, wherein the projection region (B) is arranged adjacent to the lower edge (U) of the laminated pane (1).

7. The laminated pane (1) according to any of claims 1 to 6, wherein the opaque masking layer (5) is arranged at least partially in a peripheral edge region and, in particular in a portion which overlaps with the projection region (B), has a greater width than in portions different therefrom.

8. The laminated pane (1) according to any of claims 1 to 7, wherein the opaque masking layer (5) is designed as an opaque cover print on the interior-side surface (II) of the outer pane (2) or as an opaquely colored region of the at least one thermoplastic intermediate layer (3).

9. The laminated pane (1) according to any of claims 1 to 8, wherein the reflective layer (4) is designed as a reflective coating or as a reflective film.

10. The laminated pane (1) according to any of claims 1 to 9, additionally comprising a coating (9) which is designed as a protective coating or an antireflection coating and is arranged on the surface of the λ/4 retardation plate (8) facing away from the adhesive layer (7).

11. A projection arrangement (100) at least comprising:
- a laminated pane (1) according to any of claims 1 to 10, and
- an image display device (10) which is directed toward the projection region (B) and is arranged in such a way that the interior-side surface (IV) of the inner pane (6) is the surface of the inner pane (6) closest to the image display device (10).

12. The projection arrangement (100) according to claim 11, wherein the image display device (10) is a projector or a display, preferably an LCD display, LED display, microLED display, OLED display or electroluminescent display, particularly preferably an LCD display, and the radiation preferably strikes the laminated pane (1) at an angle of incidence of 55° to 80°, particularly preferably of 62° to 77°.

13. The projection arrangement (100) according to claim 11 or 12, wherein the image display device (10) emits s-polarized light.

14. The projection arrangement (100) according to claim 11 or 12, wherein the image display device (10) emits circularly polarized light.

15. A use of a laminated pane (1) according to any of claims 1 to 10 as a vehicle pane in means of transport for traffic on land, in the air or on water, in particular in motor vehicles and in particular as a windshield for a head-up display.

## Revendications

1. Vitrage feuilleté (1) comportant une zone de projection (B), une zone de transparence principale (H), un bord supérieur (O), un bord inférieur (U) et deux bords latéraux de vitre (K), comprenant au moins une vitre externe (2), au moins une couche intermédiaire thermoplastique (3), une couche réfléchissante (4), une couche de masquage opaque (5), une vitre interne (6), une couche adhésive (7) et une lame à retard de λ/4 (8),
dans lequel
la vitre externe (2) présente une surface côté externe (I) détournée de l'au moins une couche intermédiaire thermoplastique (3) et une surface côté espace interne (II) tournée vers l'au moins une couche intermédiaire thermoplastique (3) et la vitre interne (6) présente une surface côté externe (III) tournée vers l'au moins une couche intermédiaire thermoplastique (3) et une surface côté espace interne (IV) détournée de l'au moins une couche intermédiaire thermoplastique (3),
la zone de projection (B) est disposée à l'extérieur de la zone de transparence principale (H), la couche réfléchissante (4) est disposée au moins dans la zone de projection (B) entre la vitre externe (2) et la vitre interne (6),
la couche de masquage opaque (5) est disposée au moins dans la zone de projection (B) entre la vitre externe (2) et la vitre interne (6) et est disposée spatialement derrière la couche réfléchissante (4), vue à travers le vitrage feuilleté (1), en partant de la surface côté espace interne (IV) de la vitre interne (6),
la lame à retard de λ/4 (8) est reliée à la surface côté espace interne (IV) de la vitre interne (6) par l'intermédiaire de la couche adhésive (7) et est disposée dans une zone du vitrage feuilleté (1) qui, vue verticalement à travers le vitrage feuilleté (1), se trouve entièrement dans la zone dans laquelle est disposée la couche de masquage opaque (5), et
la zone de projection (B), vue verticalement à travers le vitrage feuilleté (1), se trouve entièrement dans la zone du vitrage feuilleté (1) dans laquelle est disposée la lame à retard de λ/4 (8).

2. Vitrage feuilleté (1) selon la revendication 1, dans lequel la couche réfléchissante (4) est disposée sensiblement sur toute la surface entre la vitre externe (2) et la vitre interne (6).

3. Vitrage feuilleté (1) selon la revendication 1, dans lequel la couche réfléchissante (4) est disposée entre la vitre externe (2) et la vitre interne (6) dans une zone du vitrage feuilleté (1) qui, vue verticalement à travers le vitrage feuilleté (1), se trouve entièrement dans la zone dans laquelle est disposée la couche de masquage opaque (5).

4. Vitrage feuilleté (1) selon l'une des revendications 1 à 3, dans lequel la couche réfléchissante (4) est disposée entre la vitre interne (6) et l'au moins une couche intermédiaire thermoplastique (3) ou entre la vitre externe (2) et l'au moins une couche intermédiaire thermoplastique (3), ou dans lequel le vitrage feuilleté (1) comprend au moins deux couches intermédiaires thermoplastiques (3) et la couche réfléchissante (4) est disposée entre deux des couches intermédiaires thermoplastiques (3).

5. Vitrage feuilleté (1) selon l'une des revendications 1 à 4, dans lequel la couche adhésive (7) est une couche de polymère thermoplastique ou un adhésif optiquement net.

6. Vitrage feuilleté (1) selon l'une des revendications 1 à 5, dans lequel la zone de projection (B) est disposée de manière adjacente au bord inférieur (U) du vitrage feuilleté (1).

7. Vitrage feuilleté (1) selon l'une des revendications 1 à 6, dans lequel la couche de masquage opaque (5) est disposée au moins partiellement dans une zone marginale circonférentielle et présente en particulier une largeur plus importante dans une section qui est en recouvrement par rapport à la zone de projection (B) que dans des sections différentes de celle-ci.

8. Vitrage feuilleté (1) selon l'une des revendications 1 à 7, dans lequel la couche de masquage opaque (5) est réalisée sous forme d'impression de recouvrement opaque sur la surface côté espace interne (II) de la vitre externe (2) ou sous forme de zone colorée opaque de l'au moins une couche intermédiaire thermoplastique (3).

9. Vitrage feuilleté (1) selon l'une des revendications 1 à 8, dans lequel la couche réfléchissante (4) est réalisée sous forme de revêtement réfléchissant ou sous forme de film réfléchissant.

10. Vitrage feuilleté (1) selon l'une des revendications 1 à 9, comprenant en outre un revêtement (9) réalisé sous forme de revêtement de protection ou de revêtement antireflet et disposé sur la surface de la lame à retard de λ/4 (8) qui s'éloigne de la couche adhésive (7).

11. Système de projection (100) comprenant au moins
- un vitrage feuilleté (1) selon l'une des revendications 1 à 10, et
- un dispositif d'affichage d'image (10) dirigé vers la zone de projection (B) et disposé de telle sorte que la surface côté espace interne (IV) de la vitre interne (6) est la surface de la vitre interne (6) la plus proche du dispositif d'affichage d'image (10).

12. Système de projection (100) selon la revendication 11, dans lequel le dispositif d'affichage d'image (10) est un projecteur ou un écran, de préférence un écran LCD, un écran DEL, un écran microdel, un écran DELO ou un écran électroluminescent, de manière particulièrement préférée un écran LCD, et le rayonnement atteint le vitrage feuilleté (1) de préférence à un angle d'incidence de 55° à 80°, de manière particulièrement préférée de 62° à 77°.

13. Système de projection (100) selon la revendication 11 ou 12, dans lequel le dispositif d'affichage d'image (10) émet une lumière polarisée s.

14. Système de projection (100) selon la revendication 11 ou 12, dans lequel le dispositif d'affichage d'image (10) émet une lumière polarisée circulaire.

15. Utilisation d'un vitrage feuilleté (1) selon l'une des revendications 1 à 10 comme vitre de véhicule dans des moyens de locomotion pour la circulation terrestre, aérienne ou maritime, en particulier dans des véhicules automobiles et en particulier comme pare-brise pour un affichage tête haute.
